(19) Europäisches Patentamt / European Patent Office / Office européen des brevets

(11) **EP 4 280 452 A1**

(12) **EUROPEAN PATENT APPLICATION**
published in accordance with Art. 153(4) EPC

(43) Date of publication:
**22.11.2023 Bulletin 2023/47**

(21) Application number: **22739432.7**

(22) Date of filing: **12.01.2022**

(51) International Patent Classification (IPC):
**H02P 6/182** $^{(2016.01)}$  **H02P 6/185** $^{(2016.01)}$

(52) Cooperative Patent Classification (CPC):
**H02P 6/182; H02P 6/185; H02P 21/18; H02P 27/06**

(86) International application number:
**PCT/JP2022/000804**

(87) International publication number:
**WO 2022/154027 (21.07.2022 Gazette 2022/29)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **18.01.2021 JP 2021005622**

(71) Applicant: **Oriental Motor Co., Ltd.
Tokyo 111-0056 (JP)**

(72) Inventor: **UMINO, Hikaru
Tsukuba-shi, Ibaraki 300-2635 (JP)**

(74) Representative: **Witte, Weller & Partner
Patentanwälte mbB
Postfach 10 54 62
70047 Stuttgart (DE)**

(54) **MOTOR CONTROL DEVICE AND DRIVE SYSTEM EQUIPPED WITH SAME**

(57)  A motor control device controls an AC synchronous motor through sensorless control without using a rotor position sensor. The motor control device includes: a first position estimator that estimates the position of the rotor of the AC synchronous motor on a fixed coordinate system by a first estimation method; a second position estimator that estimates the position of the rotor of the AC synchronous motor on a fixed coordinate system by a second estimation method different from the first estimation method; and drive control means that drives the AC synchronous motor based on the estimation results of the first position estimator and the second position estimator.

FIG. 2A

**Description**

CROSS-REFERENCE TO RELATED APPLICATIONS

This application claims the benefit of priority to Japanese Patent Application No. 2021-5622 filed on January 18, 2021, the disclosure of which is entirely incorporated herein by reference.

TECHNICAL FIELD

The present invention relates to a motor control device that controls an AC synchronous motor through sensorless control, and to a drive system including the same.

BACKGROUND ART

AC synchronous motors are electric motors each including permanent magnets provided in a rotor thereof and configured to operate while receiving AC supply, and examples thereof include brushless DC motors and stepping motors. That is, electric motors other than those configured to receive DC supply and change the direction of winding current with the use of a commutator are categorized as AC motors, and electric motors each including permanent magnets provided in a rotor thereof are categorized as synchronous motors.

A typical motor control device for such an AC synchronous motor controls an inverter to convert DC to AC, and the inverter supplies the AC to the electric motor. In order to properly control the inverter, rotor position information is required. Therefore, the inverter is controlled by utilizing the output of a rotor position detector that detects the rotational position of the rotor.

A known AC motor driving system is such that the AC motor is driven by estimating the rotor position without the use of the rotor position detector and controlling the inverter based on the estimated rotor position. This control system is referred to as "position sensorless control" or simply "sensorless control." Without the rotor position detector, there is no need to give consideration to the mounting position accuracy of the rotor position detector and the wiring routing of the rotor position detector and the like. In addition, the sensorless control can be advantageously applied to motors in which the rotor position detector cannot be provided for physical reasons and to motors in which the rotor position detector cannot be used for environmental reasons.

In a typical sensorless control process, the rotor position is estimated by an induced voltage method. In the induced voltage method, an induced voltage is computed based on a motor model by using a voltage command and a current detection value, and the rotor position is estimated based on the induced voltage. More specifically, a $\gamma\delta$ rotational coordinate system is defined which has an axis error $\Delta\theta$ with respect to the dq-axes of a dq rotational coordinate system that is rotated synchronously with the rotor. Then, the induced voltage is estimated on the $\gamma\delta$-axes of the $\gamma\delta$ rotational coordinate system, and a PLL (phase lock loop) control is performed to output an estimated speed so as to nullify $\Delta\theta$ (PTL 1). Another known method is such that a rotor flux position is estimated on the dq-axes with the use of an adaptive observer and the speed is estimated so as to nullify the d-axis component of the rotor flux (PTL 2). These methods can be employed when the motor rotation speed is in a middle to higher speed range in which a relatively high induced voltage is generated.

When the motor rotation speed is in a lower speed range including a zero speed level, the induced voltage is smaller, making it difficult to estimate the induced voltage. Therefore, further another method is used. Specifically, a higher-frequency voltage command is superposed on the voltage command on the dq-axes, and rotor position information contained in motor inductance is computed by detecting a current response to the higher-frequency voltage command. Thus, the axis error $\Delta\theta$ is determined, and the speed is estimated so as to nullify the axis error $\Delta\theta$ (PTL 3).

It is proposed that the aforementioned two methods are used in combination for the sensorless control for the entire speed range. Specifically, the latter method in which the higher-frequency voltage command is superposed is used for the lower speed range, and the former method in which a higher-frequency superposition voltage is reduced and the estimated position is determined by the adaptive flux observer is used for the middle to higher speed range (PTL 4). Further, a method in which the estimated positions determined by the aforementioned methods are weighted to smoothly switch the control methods even under a load is also disclosed (PTL 5).

CITATION LIST

PATENT LITERATURE

PTL 1: Paragraphs [0007] to [0016] in JP 2008-011616A
PTL 2: Expression (18) in JP WO2002/091558A1
PTL 3: Paragraph [0076] and Expression (8) in JP 2002-058294A
PTL 4: Claims 5 and 6 in JP WO2010/109528A1
PTL 5: Paragraph [0063] and FIG. 6 in JP WO2014/128887A1
PTL 6: Paragraph [0005] in JP 2006-158046A
PTL 7: JP HEI8(1996)-256496A
PTL 8: Paragraphs [0001] and [0042] in JP HEI10(1998)-94298A

NONPATENT LITERATURE

NPL 1: Z. Chen, et.al., "An Extended Electromotive Force Model for Sensorless Control of Interior Permanent-Magnet Synchronous Motors" IEEE TRANSACTIONS ON INDUSTRIAL ELECTRONICS, VOL. 50, NO. 2, APRIL 2003, p.288 to 295
NPL 2 : T. Aihara, et.at., "Sensorless Torque Control of Salient-Pole Synchronous Motor at Zero-Speed Operation" IEEE TRANSACTIONS ON POWER ELECTRONICS, VOL. 14, NO. 1, JANUARY 1999, p.202 to 208

SUMMARY OF INVENTION

PROBLEMS TO BE SOLVED BY INVENTION

It is difficult to perform the position sensorless control to stably drive the motor with higher responsiveness in the entire speed range from the zero speed level to the higher speed range. This is attributable to a problem associated with the control transition from the control method for the lower speed range to the control method for the middle speed range, and the poor responsiveness of the position estimation for the lower speed range.

The higher-frequency voltage superposition method suffers from vibrations attributable to a higher-frequency current as pointed out in PTL 6. In addition, the higher-frequency voltage has a frequency of less than several hundreds Hz at the highest and, therefore, the cycle of the position computation is relatively long. Furthermore, the not-so-high-frequency voltage command is demodulated to a current response on the dq-axes, thereby further deteriorating the responsiveness of the position computation. Therefore, the responsiveness of the position computation for the lower speed range suffers from such limitation, as long as the higher-frequency voltage superposition method is employed.

Where the estimation is performed on the dq-axes of the dq rotational coordinate system, the value to be computed is not the rotor position itself, but is the position error $\Delta\theta$. For the determination of the rotor position, it is necessary to output the speed through the PLL control and integrate the speed so as to compute the position $\theta$ on an $\alpha\beta$ fixed coordinate system fixed to the stator of the motor. However, the PLL controller has a limited responsiveness. Further, current values and the like on the estimation rotational coordinate system ($\gamma\delta$ rotational coordinate system) are used for the computation of the position error $\Delta\theta$ and, therefore, the estimation accuracy is deteriorated if the position error $\Delta\theta$ is increased due to rapid acceleration/deceleration and an abrupt load. Therefore, position errors $\Delta\theta$ computed when the motor rotation speed is in the lower speed range and when the motor rotation speed is in the middle to higher speed range are deviated from each other. In a switch range in which the position estimation is switched between the position estimation for the lower speed range (lower speed position estimation) and the position estimation for the middle to higher speed range (middle to higher speed position estimation), therefore, the estimated position is liable to be unstable and the motor is liable to chatter.

The following practical problem is liable to occur due to these disadvantages. If the motor is stopped with an abrupt load during the driving thereof in the higher speed range, for example, the position estimation is switched from the middle to higher speed position estimation to the lower speed position estimation. At this time, the motor is often liable to step out or to be driven in a direction opposite to a command direction. The similar problem is liable to occur due to the rapid acceleration/deceleration.

Where the AC synchronous motor is thus controlled through the sensorless control, the motor failures are liable to occur due to the poor responsiveness.

In view of this, embodiments of the present invention provide a motor control device capable of speedily estimating the rotor position to thereby control the motor with higher responsiveness, and a drive system including the motor control device.

SOLUTION TO PROBLEMS

One embodiment of the present invention provides a motor control device that controls an AC synchronous motor through sensorless control without using a rotor position sensor. The motor control device includes: a first position estimator that estimates the position of the rotor of the AC synchronous motor on a fixed coordinate system by a first estimation method; a second position estimator that estimates the position of the rotor of the AC synchronous motor on a fixed coordinate system by a second estimation method different from the first estimation method; and drive control means that drives the AC synchronous motor based on the estimation results of the first position estimator and the second position estimator.

With this arrangement, the first estimation method and the second estimation method are each adapted to estimate the rotor position on the fixed coordinate system, so that the first position estimator and the second position estimator can each speedily perform the position estimation. Therefore, the control of the AC synchronous motor based on the estimation results of the first position estimator and the second position estimator is highly responsive.

In an embodiment of the present invention, the first estimation method and the second estimation method are each adapted to estimate the rotor position without estimating an error in the rotor position. With this arrangement, the rotor position can be speedily estimated without the estimation of the rotor position error. Therefore, the AC synchronous motor can be controlled with excellent responsiveness.

In an embodiment of the present invention, the first estimation method and the second estimation method are each adapted to estimate the rotor position without using PLL (phase lock loop) control adapted to output an estimated rotor speed so as to nullify the rotor position error. This arrangement allows for speedy position estimation, making it possible to control the AC synchronous motor with excellent responsiveness.

In an embodiment of the present invention, the first position estimator outputs an estimated position signal that has two fluctuation cycles in rotor rotation per each electrical angle cycle of the stator of the motor, and the second position estimator outputs an estimated position signal that has one fluctuation cycle in the rotor rotation per each electrical angle cycle of the stator.

In an embodiment of the present invention, the first position estimator outputs an estimated position signal that has two fluctuation cycles in rotor rotation per each electrical angle cycle of the stator of the motor, and the second position estimator outputs an estimated position signal that has one fluctuation cycle in the rotor rotation per each electrical angle cycle of the stator. The motor control device further includes a cycle convertor that converts the estimated position signal of the first position estimator to an estimated position signal which is a cyclic signal that has one fluctuation cycle in the rotor rotation per each electrical angle cycle of the stator.

With this arrangement, the two types of estimated position signals can be obtained as cyclic signals each having one fluctuation cycle in the rotor rotation per each electrical angle cycle of the stator. These two types of estimated position signals can be easily combined together to provide a reasonable estimated position signal.

In an embodiment of the present invention, the first position estimator estimates the rotor position by detecting a change in the inductance of the AC synchronous motor based on current ripples occurring in the winding current of the AC synchronous motor when a position detection voltage vector is applied to the AC synchronous motor. The first position estimator is suitable for the estimation of the rotor position when the AC synchronous motor is rotated at a rotation speed in a lower speed range including a zero speed level.

In an embodiment of the present invention, the second position estimator estimates the rotor position based on an estimated value of an expanded induced voltage. The second position estimator is suitable for the estimation of the rotor position when the AC synchronous motor is rotated at a rotation speed in a middle to higher speed range in which a significant induced voltage is liable to occur.

In an embodiment of the present invention, the motor control device further includes an estimated position combiner that generates a composite estimated position by switching between a first estimated position signal and a second estimated position signal or by weighting and combining the first estimated position signal and the second estimated position signal, depending on the rotation speed of the rotor or the vector length of the expanded induced voltage, the first estimated position signal being the estimated position signal outputted by the first position estimator, the second estimated position signal being the estimated position signal outputted by the second position estimator. The drive control means drives the AC synchronous motor based on the composite estimated position generated by the estimated position combiner.

With this arrangement, the composite estimated position can be properly provided by switching between the first estimated position signal and the second estimated position signal or by weighting and combining the first estimated position signal and the second estimated position signal. The switching between the first and second estimated position signals or the weighting combination of the first and second estimated position signals is selected depending on the rotor rotation speed or the expanded induced voltage vector length. Therefore, the composite estimated position indicating the rotor position can be accurately generated for a wide rotation speed range. Thus, the AC synchronous motor can be properly controlled.

Where the first position estimator outputs the estimated position signal having two fluctuation cycles in the rotor rotation per each electrical angle cycle of the stator and the second position estimator outputs the estimated position signal having one fluctuation cycle in the rotor rotation per each electrical angle cycle of the stator, the motor control device preferably further includes a cycle convertor that converts the estimated position signal of the first position estimator to an estimated position signal which is a cyclic signal that has one fluctuation cycle in the rotor rotation per each electrical angle cycle of the stator, and the estimated position signal generated by the cycle convertor is preferably used as the first estimated position signal. In this case, the first and second estimated position signals are both cyclic signals each having one fluctuation cycle in the rotor rotation per each electrical angle cycle of the stator. Therefore, the first and second estimated position signals can be easily combined together to provide a reasonable composite estimated position. In this case, the composite estimated position is also a cyclic signal that has one fluctuation cycle in the rotor rotation per each electrical angle cycle of the stator.

In an embodiment of the present invention, the motor control device further includes a first compensator and a second compensator that respectively compensate the first estimated position signal and the second estimated position signal according to the motor current and the rotor rotation speed. In another embodiment of the present invention, the motor control device further includes a composite estimated position compensator that compensates the composite estimated position according to the motor current and the rotor rotation speed. With these arrangements, the rotor position can be more accurately estimated and, therefore, the AC synchronous motor can be more properly controlled.

In an embodiment of the present invention, the first position estimator estimates the rotor position by detecting the change in the inductance of the AC synchronous motor based on the current ripples occurring in the winding current of the AC synchronous motor when the position detection voltage vector is applied to the AC synchronous motor. The estimated position combiner generates the composite estimated position without using the first estimated position signal when the rotor rotation speed is in a higher speed range not less than a predetermined speed level. Further, the application of the position detection voltage vector is stopped when the rotor rotation speed is in the higher speed range.

With this arrangement, the position estimation can be accurately achieved based on the induced voltage when the rotor rotation speed is in the higher speed range. Therefore, the composite estimated position is generated without the use of the first estimated position signal. Thus, the AC synchronous motor can be properly controlled based on the accurately estimated position. In addition, the application of the position detection voltage vector is stopped when the rotor rotation speed is in the higher speed range, thereby making it possible to suppress the influence of the position detection voltage vector on the AC synchronous motor and to suppress the vibrations and the like.

Another embodiment of the present invention provides a drive system, which includes an AC synchronous motor, an inverter that supplies an alternating current to the AC synchronous motor, and the motor control device that controls the inverter as described above. This arrangement makes it possible to drive the AC synchronous motor with excellent responsiveness.

The above and other objects, features, and effects of the present invention will become more apparent from the following detailed description of the preferred embodiments with reference to the attached drawings.

BRIEF DESCRIPTION OF DRAWINGS

FIG. 1A is a block diagram for describing the configuration of a drive system including a motor control device according to an embodiment of the present invention.
FIG. 1B is a block diagram for describing the functional configuration of a controller provided in the motor control device.
FIG. 2A is a block diagram showing an exemplary configuration of a weighting position estimator of the controller.
FIG. 2B is a block diagram showing another exemplary configuration of the weighting position estimator of the controller.
FIG. 3 is an electric circuit diagram for describing the configuration of an inverter provided in the motor control device by way of example.
FIGS. 4A and 4B show voltage vectors corresponding to eight states of the inverter.
FIG. 5 is an electric circuit diagram of an AC motor model showing a three-phase motor model of Δ-connection.
FIG. 6A is an exemplary waveform diagram showing the waveforms of voltages, currents and current derivatives observed when the AC motor M is rotated at a lower rotation speed (including a halt state).
FIG. 6B is another exemplary waveform diagram showing the waveforms of voltages, currents and current derivatives observed when the AC motor M is rotated at a lower rotation speed (including a halt state).
FIG. 7 is an electric circuit diagram of an AC motor model showing a three-phase motor model of Y-connection.
FIG. 8 shows ideal sinusoidal waveform inductances on a UVW fixed coordinate system by way of example.
FIGS. 9A, 9B and 9C respectively show inductances Ld, Lq, Mdq on a dq rotational coordinate system, inductances Lα, Lβ, Mαβ on an αβ fixed coordinate system, and inductance components m, n, s calculated and plotted for the ideal sinusoidal waveform inductances by way of example.

FIGS. 10A, 10B and 10C respectively show current derivatives to be obtained when three voltage vectors are applied as calculated based on the ideal sinusoidal waveform inductances by way of example.

FIGS. 11A, 11B and 11C respectively show current derivatives determined by a magnetic analysis performed by inputting the three voltage vectors to a three-phase surface magnet motor and changing the rotor position in one rotation cycle of electrical angle with a motor q-axis current maintained at zero.

FIG. 11D shows three-phase position estimation signals Us, Vs, Ws, and FIG. 11E shows two-phase position estimation signals αs, βs on the αβ fixed coordinate system, and an estimated position determined based on the two-phase position estimation signals αs, βs.

FIGS. 12A and 12B respectively show motor inductances Lu, Lv, Lw, Muv, Mvw, Mwu and interlinkage magnetic fluxes of respective phase coils determined by the magnetic analysis performed under the conditions used for FIGS. 11A to 11E.

FIGS. 13A and 13B respectively show motor inductances Lu, Lv, Lw, Muv, Mvw, Mwu and interlinkage magnetic fluxes of the respective phase coils determined by a magnetic analysis with a positive q-axis current, and FIGS. 13C and 13D respectively show motor inductances Lu, Lv, Lw, Muv, Mvw, Mwu and interlinkage magnetic fluxes of the respective phase coils determined by a magnetic analysis with a negative q-axis current.

FIG. 14A shows three-phase position estimation signals Us, Vs, Ws determined with the positive q-axis current, and FIG. 14B shows three-phase position estimation signals Us, Vs, Ws determined with the negative q-axis current.

FIG. 14C shows estimated positions respectively computed for the positive q-axis current and for the negative q-axis current, and FIG. 14D shows deviations of the estimated positions from an ideal estimation angle for the positive q-axis current and for the negative q-axis current.

FIG. 15A shows estimated positions corrected by translation correction, and FIG. 15B shows deviations of the estimated positions corrected by the translation correction.

FIG. 16A shows estimated positions corrected by harmonic correction, and FIG. 16B shows deviations of the estimated positions corrected by the harmonic correction.

FIGS. 17A and 17B respectively show the results of transformation of the inductances on the UVW fixed coordinate system shown in FIG. 12A to inductances on the dq rotational coordinate system and on the αβ fixed coordinate system, and FIG. 17C shows relevant components m, n, s.

FIGS. 18A, 18B and 18C respectively show current derivatives obtained by using the three voltage vectors with the motor current maintained at zero.

FIG. 18D shows three-phase position estimation signals Us, Vs, Ws each defined based on a difference between current derivatives of the same phase, and FIG. 18E shows an estimated position computed based on these three-phase position estimation signals Us, Vs, Ws.

FIGS. 19A, 19B and 19C show current derivatives acquired when the motor was externally forcibly rotated by applying a zero current, a positive current and a negative current to U-phase, V-phase and W-phase motor lines, respectively, by fixed phase excitation.

FIG. 20A shows three-phase position estimation signals Us, Vs, Ws defined based on the current derivatives of FIGS. 18A, 18B, 18C by using only two voltage vectors, and FIG. 20B shows an estimated position computed by using these three-phase position estimation signals Us, Vs, Ws.

FIG. 21A shows three-phase position estimation signals Us, Vs, Ws each defined based on a difference between current derivatives of the same phase in FIGS. 18A, 18B, 18C by way of example, and FIG. 21B shows an estimated position computed by using these three-phase position estimation signals Us, Vs, Ws.

FIG. 22A shows three-phase position estimation signals Us, Vs, Ws recomputed with the signals Vs, Ws of FIG. 21A amplified twice, and FIG. 22B shows an estimated position computed by using these three-phase position estimation signals Us, Vs, Ws.

FIG. 23 shows a two-cycle signal generated by a first estimation method based on pulse application, and a one-cycle signal generated by a second estimation method based on an expanded induced voltage.

FIG. 24 is a flowchart for describing a process to be performed by a cycle convertor to convert the two-cycle signal to the one-cycle signal.

FIG. 25 shows the results of the cycle conversion process of FIG. 24.

FIG. 26 is a flowchart showing a process to be performed by an estimated position combiner for the weighting combination and the switching combination of first and second estimated position signals by way of example.

FIG. 27 shows the results of the process for the weighting combination and the switching combination in FIG. 26.

FIG. 28 shows the results of an experiment for a rapid acceleration operation.

FIG. 29 shows the results of an experiment for a sudden stop operation.

FIG. 30 shows the results of an experiment for the sudden stop operation with an estimated position compensated (corrected).

DESCRIPTION OF EMBODIMENTS

An embodiment of the present invention will hereinafter be described, which solves the conventional problem such that the PLL control is additionally required in order to provide the estimated position θ because the position errors Δθ are outputted in the estimation computation for the lower speed range and in the estimation computation for the middle to higher speed range, and achieves a highly responsive sensorless control for the entire speed range. In this embodiment, a first estimation method and a second estimation method are used for the computation of the estimated rotor position on the αβ fixed coordinate system. In the first and second estimation methods, the rotor position on the fixed coordinate system is estimated without the estimation of the position errors Δθ on the rotational coordinate system. In other words, in the first and second estimation methods, the rotor position on the fixed coordinate system is estimated without the use of the PLL control in which the estimated rotor speed is outputted so as to nullify the rotor position errors Δθ on the rotational coordinate system. This makes it possible to speedily estimate the position, thereby achieving a highly responsive motor control.

In the first estimation method, specifically, the estimated position on the αβ fixed coordinate system is determined based on current ripples occurring due to a voltage applied in each PWM control cycle. The first estimation method is suitable for the estimation of the rotor position for the lower speed range. In the second estimation method, the estimated position on the αβ fixed coordinate system is determined by employing a least-order observer for the computation of an expanded induced voltage. The second estimation method is suitable for the estimation of the rotor position for the middle to higher speed range. Methods described in NPL 1 and PTL 7, for example, can be employed for the second estimation method.

In this embodiment, the estimation results obtained by the first and second estimation methods are switched therebetween or weighted and combined together based on the estimated speed or the vector length of the expanded induced voltage, whereby a final estimated position (composite estimated position) is provided. Thus, the highly responsive sensorless control can be smoothly performed for the entire speed range including a motor halt state without the use of the PLL control.

Where the estimated positions determined by the first estimation method and the second estimation method do not match each other, this problem can be solved by performing compensation so as to approximate the respective estimated positions to a true position.

For example, the estimated position (first estimated position) determined by the first estimation method based on the detection of the current ripples is liable to have a great error due to the motor current. Therefore, the first estimated position is compensated depending on the motor current. In the first estimation method, it is sometimes necessary to use a digital filter depending on the S/N ratio (signal-to-noise ratio) of the detection of the current ripples and, in this case, the computation of the estimated position is liable to delay depending on the speed. Therefore, the estimation results obtained by the first and second estimation methods are compensated based on the current and the speed so as to be approximated to a true estimated value, and then weighted to provide a final estimated position (composite estimated position). Even if the motor is stopped due to application of an abrupt load during higher speed rotation thereof, an error in the estimated position due to the load and the speed can be reduced. Thus, the control transition (the transition between the estimation methods) can be stably achieved.

Thus, even if the motor is subjected to the abrupt load or the rapid acceleration/deceleration, for example, to be instantaneously stopped, the motor control device can achieve a highly responsive and stable sensorless drive control for the entire speed range including the halt state and the higher speed driving state.

Embodiments of the present invention will hereinafter be described in detail with reference to the attached drawings.

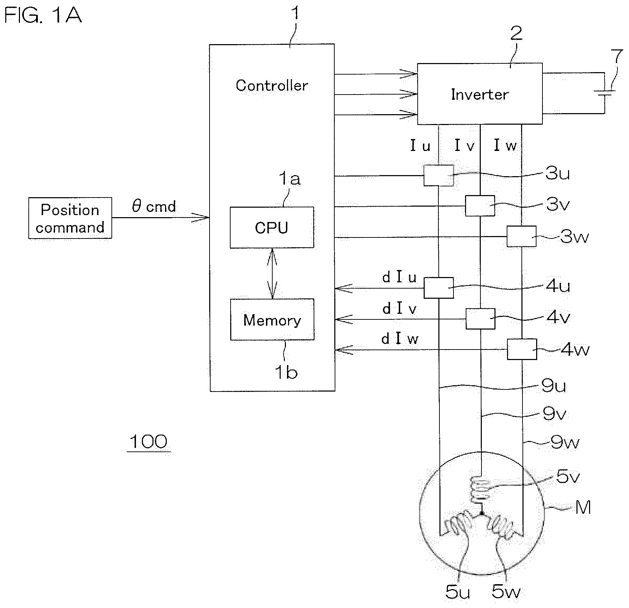

FIG. 1A is a block diagram for describing the configuration of a drive system including a motor control device according to one embodiment of the present invention. The motor control device 100 is a device (AC motor control device) adapted to drive an AC motor M (AC synchronous motor). More specifically, the motor control device 100 drives the AC motor M by so-called sensorless control, i.e., by controlling the AC motor M without the use of a rotor position detector (rotor position sensor) for the detection of the position of the rotor of the AC motor M. The AC motor M is a synchronous motor including permanent magnets provided in its rotor and, more specifically, may be a surface magnet synchronous motor (SPMSM). In this embodiment, the AC motor M is a three-phase permanent magnet synchronous motor, and has a U-phase winding 5u, a V-phase winding 5v and a W-phase winding 5w. Hereinafter, these windings are often referred to generally as "winding(s) 5uvw." In FIG. 1A, the windings 5uvw are connected together in a Y-connection form by way of example, but may be connected together in a Δ-connection form as will be described later.

In this example, the motor control device 100 has a feedback system including a position control loop, a speed control loop and a current control loop, and is configured so as to perform a position servo control operation to control the rotor position of the AC motor M according to a position command. Vector control is employed for the current control. A command to be externally applied is not limited to the position command, but may be a speed command or may be a torque command (current command). Where the speed command is applied, the position control loop is not used.

Where the torque command is applied, the current control loop is used alone, and neither the position control loop nor the speed control loop is used.

The rotor position is estimated with the use of signals obtained by current derivative detectors without the use of the rotor position detector. More specifically, position estimation signals indicating fluctuation in the inductances of the respective phase windings of the AC motor M are generated based on current derivatives, and the rotor position is estimated based on the position estimation signals. In principle, the surface magnet synchronous motor is free from saliency and, therefore, it is considered that magnetic poles cannot be detected based on changes in inductances. Where magnets such as neodymium magnets having strong magnetic forces are used, however, the inductances are slightly changed by the magnetic saturation of iron cores.

Specifically, the motor control device 100 includes a controller 1, current detectors 3u, 3v, 3w and current derivative detectors 4u, 4v, 4w, and is configured to control an inverter 2. The inverter 2 converts a direct current supplied from a DC power source 7 into an alternating current, and supplies the alternating current to the windings 5uvw of the AC motor M. The motor control device 100, the inverter 2 and the AC motor M constitute the drive system.

The inverter 2 and the AC motor M are connected to each other via three current lines 9u, 9v, 9w (hereinafter often referred to generally as "current line(s) 9uvw") for the U-phase, the V-phase and the W-phase. The current detectors 3u, 3v, 3w and the current derivative detectors 4u, 4v, 4w are provided in the corresponding current lines 9uvw. The current detectors 3u, 3v, 3w (hereinafter often referred to generally as "current detector(s) 3uvw") respectively detect line currents flowing through the corresponding phase current lines 9uvw, i.e., a U-phase line current Iu, a V-phase line current Iv and a W-phase line current Iw (hereinafter often referred to generally as "line current(s) Iuvw"). The current derivative detectors 4u, 4v, 4w (hereinafter often referred to generally as "current derivative detector(s) 4uvw") detect changes in the line currents flowing through the corresponding phase current lines 9uvw with time, i.e., U-phase, V-phase and W-phase current derivatives dIu, dIv, dIw (hereinafter often referred to generally as "current derivative(s) dIuvw"), respectively, and serve as current derivative detection means.

Where the windings 5uvw of the AC motor M are connected together in the Y-connection form, the line currents Iuvw are respectively equal to phase currents iu, iv, iw (hereinafter often referred to generally as "phase current(s) iuvw") flowing through the corresponding phase windings 5uvw. Where the windings 5uvw of the AC motor M are connected together in the Δ-connection form, a relationship between the line currents Iuvw and the phase currents iuvw is represented by an expression (3) to be described later.

The line currents and the phase currents each have a value corresponding to a winding current flowing through the winding 5uvw of the AC motor M.

The controller 1 controls the inverter 2 based on a position command θcmd. The controller 1 is provided in the form of a computer, and includes a processor (CPU) 1a, and a memory 1b as a recording medium that records a program to be executed by the processor 1a.

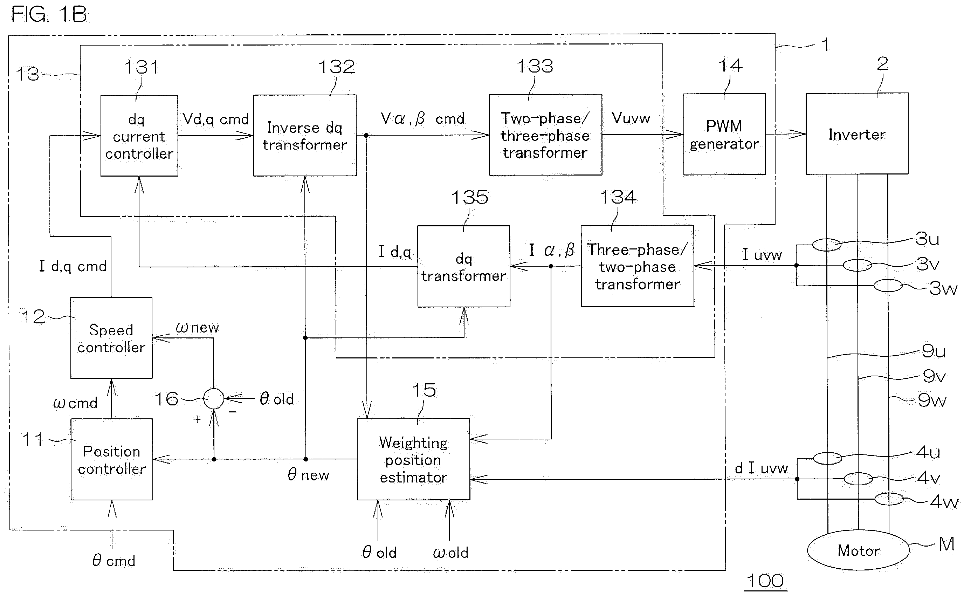

FIG. 1B is a block diagram for describing the functional configuration of the controller 1. The controller 1 is configured so that the processor 1a executes the program to perform the functions of a plurality of functional processing portions. The functional processing portions include a position controller 11, a speed controller 12, a current controller 13, a PWM generator 14, a weighting position estimator 15, and a speed estimator 16. The current controller 13 includes a dq current controller 131, an inverse dq transformer 132, a two-phase/three-phase transformer 133, a three-phase/two-phase transformer 134, and a dq transformer 135.

The weighting position estimator 15 performs a rotor position estimating computation to estimate the position of the rotor of the AC motor M by using signals outputted by the current derivative detectors 4uvw (i.e., the current derivatives dIuvw) and current detection values Iα, Iβ (shown by Iα,β in associated figures) supplied from the three-phase/two-phase transformer 134, and feeds back the estimated position θ (= θnew) to the position controller 11. The position controller 11 generates a speed command ωcmd based on the estimated position θ so as to match the rotor position with the position command θcmd, and supplies the speed command ωcmd to the speed controller 12. In this manner, the position control loop is provided.

The estimated position θ of the rotor is also supplied to the speed estimator 16. The speed estimator 16 performs a rotor speed estimating computation to determine a change in the estimated position θ with time to estimate the speed of the rotor, and supplies the estimated speed ω (= ωnew) to the speed controller 12. The speed controller 12 generates current commands Idcmd, Iqcmd (shown by Id,qcmd in the associated figures) based on the estimated speed ω so as to match the rotor speed with the speed command ωcmd, and supplies the current commands Idcmd, Iqcmd to the current controller 13. In this manner, the speed control loop is provided.

The line currents Iuvw detected by the current detectors 3uvw (precisely, the detection values of the line currents Iuvw) are supplied to the current controller 13. The current controller 13 generates a U-phase voltage command Vu, a V-phase voltage command Vv and a W-phase voltage command Vw (hereinafter often referred to generally as "voltage command(s) Vuvw") so as to match the line currents Iuvw with the current commands Idcmd, Iqcmd, and supplies the voltage commands Vuvw to the PWM generator 14. In this manner, the current control loop is provided.

The PWM generator 14 is pulse width modulation signal generation means that generates PWM control signals (pulse width modulation signals) according to the voltage commands Vuvw, and supplies the PWM control signals to the inverter 2. Thus, voltages according to the voltage commands Vuvw are applied across the windings 5uvw of the AC motor M via the current lines 9uvw by the PWM generator 14.

The speed controller 12 generates a d-axis current command Idcmd and a q-axis current command Iqcmd on a dq rotational coordinate system, and supplies the d-axis current command Idcmd and the q-axis current command Iqcmd to the current controller 13. The dq rotational coordinate system is a rotational coordinate system defined by a d-axis extending in the magnetic flux direction of the rotor of the AC motor M and a q-axis orthogonal to the d-axis, and rotated according to the rotation angle (electrical angle) of the rotor. The three-phase/two-phase transformer 134 transforms the three-phase line currents Iuvw detected by the current detectors 3uvw into two-phase current values $I\alpha$, $I\beta$ on an $\alpha\beta$ coordinate system which is a two-phase fixed coordinate system. The dq transformer 135 transforms the two-phase current values $I\alpha$, $I\beta$ on the $\alpha\beta$ coordinate system into a d-axis current value Id and a q-axis current value Iq on the dq rotational coordinate system. The current values Id, Iq on the dq rotational coordinate system (shown by Id,q in the associated figures) are supplied to the dq current controller 131. The dq current controller 131 generates a d-axis voltage command Vdcmd and a q-axis voltage command Vqcmd (which are voltage commands on the dq rotational coordinate system) so as to match the d-axis current value Id and the q-axis current value Iq with the d-axis current command Idcmd and the q-axis current command Iqcmd, respectively. The voltage commands Vdcmd, Vqcmd (shown by Vd,qcmd in the associated figures) are coordinate-transformed into voltage commands $V\alpha$cmd, $V\beta$cmd (shown by $V\alpha,\beta$cmd in the associated figures) on the $\alpha\beta$ coordinate system by the inverse dq transformer 132. Further, the voltage commands $V\alpha$cmd, $V\beta$cmd on the $\alpha\beta$ coordinate system are coordinate-transformed into the three-phase voltage commands Vuvw by the two-phase/three-phase transformer 133. The three-phase voltage commands Vuvw are supplied to the PWM generator 14.

The weighting position estimator 15 supplies the estimated position $\theta$ (= $\theta$new) to the inverse dq transformer 132 and the dq transformer 135. The estimated position $\theta$ is used for the computation for the coordinate transformation between the dq rotational coordinate system and the $\alpha\beta$ coordinate system and for the speed estimating computation to be performed by the speed estimator 16. The speed estimator 16 determines a difference $\theta$new-$\theta$old between the estimated position $\theta$ (= $\theta$new) generated by the weighting position estimator 15 in the current computation cycle and an estimated position $\theta$ (= $\theta$old) generated by the weighting position estimator 15 in a previous computation cycle, and outputs the difference $\theta$new-$\theta$old as the rotor rotation speed $\omega$ (= $\omega$new) .

The current controller 13 is drive control means that controls the PWM generator 14 so as to drive the AC motor M according to the estimated position $\theta$ supplied from the weighting position estimator 15.

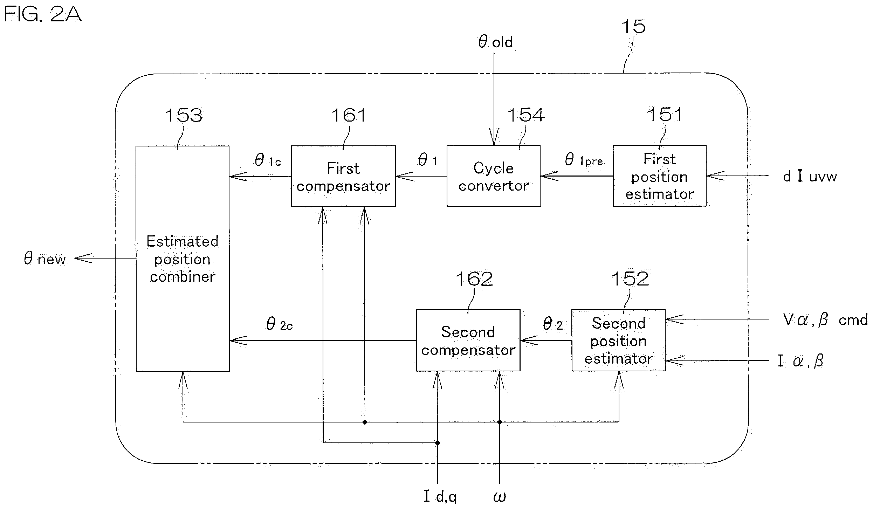

FIG. 2A is a block diagram for describing the configuration of the weighting position estimator 15 by way of example. The weighting position estimator 15 includes a first position estimator 151 and a second position estimator 152. The weighting position estimator 15 further includes an estimated position combiner 153. The first position estimator 151 estimates the rotor position (angle) on the $\alpha\beta$ coordinate system (fixed coordinate system) by a first estimation method. The second position estimator 152 estimates the rotor position (angle) on the $\alpha\beta$ coordinate system by a second estimation method. The first estimation method and the second estimation method are different from each other. In this embodiment, the first position estimator 151 computes the estimated position of the rotor of the AC motor M based on the current derivatives dIuvw detected by the current derivative detectors 4uvw. In this embodiment, the second position estimator 152 computes the estimated position $\theta$ of the rotor of the AC motor M based on the $\alpha\beta$ voltage command values $V\alpha$cmd, $V\beta$cmd and the $\alpha\beta$ current detection values $I\alpha$, $I\beta$.

In this embodiment, the first position estimator 151 outputs an estimated position signal that has two fluctuation cycles in rotor rotation per each electrical angle cycle of the stator of the AC motor M. In this embodiment, the second position estimator 152 outputs an estimated position signal that has one fluctuation cycle in the rotor rotation per each electrical angle cycle of the stator of the AC motor M. The weighting position estimator 15 further includes a cycle convertor 154 that converts the estimated position signal $\theta_{1pre}$ generated by the first position estimator 151 into a first estimated position signal $\theta_1$ that has one fluctuation cycle in the rotor rotation per each electrical angle cycle of the stator.

The estimated position combiner 153 combines the first estimated position signal $\theta_1$ and a second estimated position signal $\theta_2$ (which is the estimated position signal generated by the second position estimator 152) to generate a composite estimated position signal $\theta$ (= $\theta$new). More specifically, the estimated position combiner 153 generates the composite estimated position signal $\theta$ (= $\theta$new) by switching between the first estimated position signal $\theta_1$ and the second estimated position signal $\theta_2$ or by weighting and combining the first estimated position signal $\theta_1$ and the second estimated position signal $\theta_2$.

The weighting position estimator 15 further includes a first compensator 161 and a second compensator 162. The first compensator 161 compensates (corrects) the first estimated position signal $\theta_1$ according to the motor currents Id, Iq on the dq coordinate system and a rotor rotation speed $\omega$ (= $\omega$old (a rotor rotation speed computed in the previous computation cycle)) . The second compensator 162 compensates (corrects) the second estimated position signal $\theta_2$ according to the motor currents Id, Iq on the dq coordinate system and the rotor rotation speed $\omega$ (= wold). In this embodiment, the estimated position combiner 153 combines the first estimated position signal $\theta_{1c}$ compensated by the first compensator 161 and the second estimated position signal $\theta_{2c}$ compensated by the second compensator 162 to generate the composite estimated position signal $\theta$ (= $\theta$new). The composite estimated position signal $\theta$ (= $\theta$new) is the output of the weighting position estimator 15, i.e., the estimated position $\theta$.

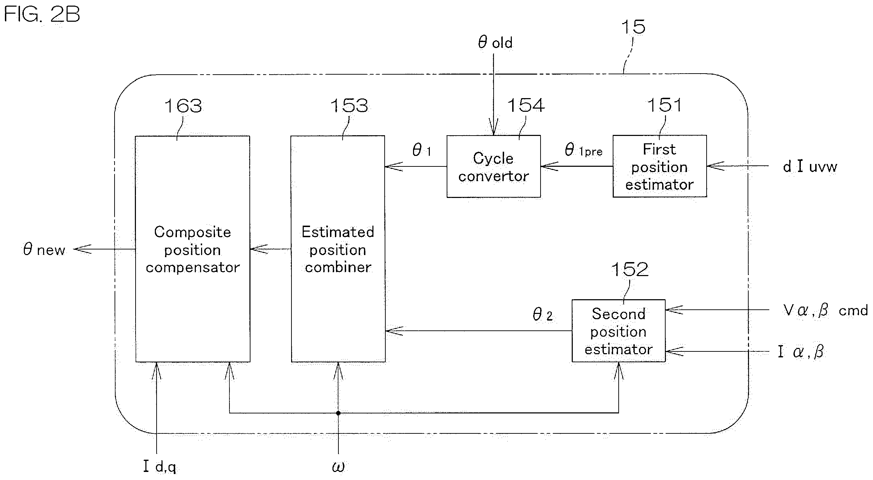

Instead of compensating the first estimated position signal $\theta_1$ and the second estimated position signal $\theta_2$ by the first compensator 161 and the second compensator 162, respectively, the estimated position combiner 153 may combine the first estimated position signal $\theta_1$ and the second estimated position signal $\theta_2$ without compensation, and then a composite position compensator 163 (composite estimated position compensator) may compensate the resulting composite estimated position signal according to the motor currents Id, Iq and the rotor rotation speed $\omega$ (= $\omega$old), as shown in FIG. 2B. The composite estimated position signal $\theta$new resulting from the compensation is the output of the weighting position estimator 15, i.e., the estimated position $\theta$.

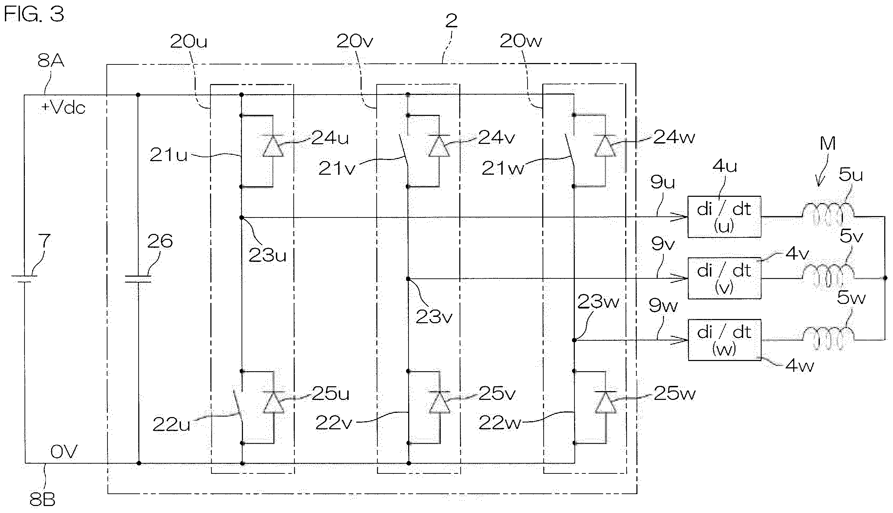

FIG. 3 is an electric circuit diagram for describing the configuration of the inverter 2 by way of example. Bridge circuits 20u, 20v, 20w for the three phases are connected in parallel between a pair of power supply lines 8A and 8B connected to the DC power source 7. A capacitor 26 for smoothing is further connected between the pair of power supply lines 8A and 8B.

The bridge circuits 20u, 20v, 20w (hereinafter often referred to generally as "bridge circuit(s) 20uvw") are respectively constituted by series circuits each including an upper arm switching device 21u, 21v, 21w (hereinafter often referred to generally as "upper arm switching device(s) 21uvw") and a lower arm switching device 22u, 22v, 22w (hereinafter often referred to generally as "lower arm switching device(s) 22uvw") connected in series. In the bridge circuits 20uvw, the current lines 9uvw for connection to the corresponding windings 5uvw of the AC motor M are respectively connected to midpoints 23u, 23v, 23w between the upper arm switching devices 21uvw and the lower arm switching devices 22uvw.

The switching devices 21uvw, 22uvw are typically power MOS transistors, and respectively incorporate parasitic diodes 24u, 24v, 24w; 25u, 25v, 25w each connected in a direction opposite to that of the DC power source 7.

The current derivative detectors 4uvw are configured so as to detect the current derivatives dIuvw which are the time-differential values of the line currents Iuvw flowing through the respective phase current lines 9uvw.

The PWM control signals supplied from the controller 1 are inputted to the gates of the switching devices 21uvw, 22uvw, whereby the switching devices 21uvw, 22uvw are turned on and off. The bridge circuits 20uvw are each controlled so that, when one of the upper arm switching device 21uvw and the lower arm switching device 22uvw thereof provided in pair is on, the other is off. The value of the PWM control signal is defined as "1" for a control state such that the upper arm switching device 21uvw is on and the lower arm switching device 22uvw is off, and the value of the PWM control signal is defined as "0" for a control state such that the upper arm switching device 21uvw is off and the lower arm switching device 22uvw is on. Then, the PWM control signals can describe any of 8 patterns (states) each expressed by a three-dimensional vector. The eight patterns (states) are expressed by (1,0,0), (1,1,0), (0,1,0), (0,1,1), (0,0,1), (1,0,1), (0,0,0) and (1,1,1) . Of these, the first six patterns (1,0,0), (1,1,0), (0,1,0), (0,1,1), (0,0,1) and (1,0,1) correspond to states in which a voltage is applied across the windings 5uvw of the AC motor M. The other two patterns (0,0,0) and (1,1,1) correspond to states in which no voltage is applied across the windings 5uvw.

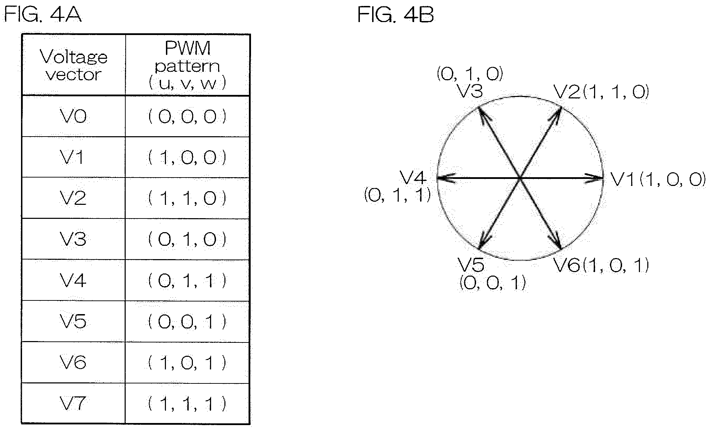

FIG. 4A shows voltage vectors V0 to V7 corresponding to the eight patterns (states) described above. The voltage vectors V1 (1, 0, 0), V2(1,1,0), V3 (0, 1, 0), V4(0,1,1), V5 (0,0,1) and V6(1,0,1) corresponding to the six patterns for which the voltage is applied across the windings can be expressed by six voltage vectors that divide an electrical angle range of 360 degrees into six equiangular ranges as shown in FIG. 4B. The voltage vectors V0 (0,0,0) and V7(1,1,1) are zero-voltage vectors for which no voltage is applied across the windings 5uvw.

Hereinafter, punctuation marks (commas) that delimit the components of the vectors may be omitted for simplification of the description of the vectors. In the following description, an expression "a voltage vector is applied" or the like means that the inverter 2 is controlled in a state expressed by the voltage vector and a voltage corresponding to the voltage vector is applied to the AC motor M.

The first position estimator 151 estimates the rotor position by the first estimation method when the rotor rotation speed is in a lower speed range (including a halt state). The second position estimator 152 estimates the rotor position by the second estimation method when the rotor rotation speed is relatively high in a middle to higher speed range. Hereinafter, the first estimation method to be used for the estimation of the rotor position for the lower speed range will be first described, and then the second estimation method to be used for the estimation of the rotor position for the middle to higher speed range will be described.

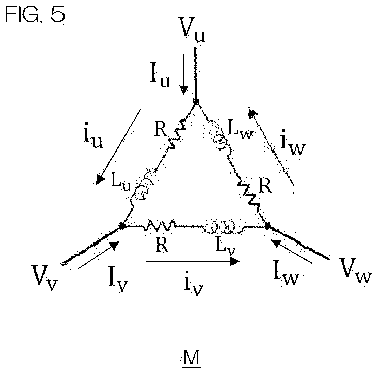

FIG. 5 is an electric circuit diagram showing a model of the AC motor M, particularly showing a three-phase motor model of $\Delta$-connection. A voltage equation for this model is represented by the following expression (1):

$$\begin{pmatrix} V_u - V_v \\ V_v - V_w \\ V_w - V_u \end{pmatrix} - R \begin{pmatrix} i_u \\ i_v \\ i_w \end{pmatrix} = \begin{pmatrix} L_u & M_{uv} & M_{wu} \\ M_{uv} & L_v & M_{vw} \\ M_{wu} & M_{vw} & L_w \end{pmatrix} \frac{d}{dt} \begin{pmatrix} i_u \\ i_v \\ i_w \end{pmatrix} \qquad \cdots (1)$$

$V_{u,v,w}$: Terminal voltages
$I_{u,v,w}$: Line currents
$i_{u,v,w}$: Phase currents
R: Phase resistances
$L_{u,v,w}$: Phase self-inductances
$M_{uv,vw,wu}$: Inter-phase mutual inductances

For the position estimation for the lower speed range, it is herein assumed that, when the motor rotation speed is sufficiently low, the term of an induced voltage is ignorable, and a change in inductance with time is sufficiently smaller than a change in current with time and, therefore, the term of the time-derivative of the inductance is ignorable. As will be described below, an inductance matrix on a UVW coordinate system is defined as Muvw, and its inverse matrix M$^{-1}$uvw is determined. With the use of the inverse matrix M$^{-1}$uvw, the phase current derivatives are represented by the following expression (2):

$$\frac{d}{dt} \begin{pmatrix} i_u \\ i_v \\ i_w \end{pmatrix} = M_{uvw}^{-1} \left( \begin{pmatrix} V_u - V_v \\ V_v - V_w \\ V_w - V_u \end{pmatrix} - R \begin{pmatrix} i_u \\ i_v \\ i_w \end{pmatrix} \right) \qquad \cdots (2)$$

$$M_{uvw} = \begin{pmatrix} L_u & M_{uv} & M_{wu} \\ M_{uv} & L_v & M_{vw} \\ M_{wu} & M_{vw} & L_w \end{pmatrix}$$

$$M_{uvw}^{-1} = \frac{1}{S} \begin{pmatrix} L_v L_w - M_{vw}^2 & -L_w M_{uv} + M_{vw} M_{wu} & -L_v M_{wu} + M_{uv} M_{vw} \\ -L_w M_{uv} + M_{vw} M_{wu} & L_u L_w - M_{wu}^2 & -L_u M_{vw} + M_{uv} M_{wu} \\ -L_v M_{wu} + M_{uv} M_{vw} & -L u M_{vw} + M_{uv} M_{wu} & L_u L_v - M_{uv}^2 \end{pmatrix}$$

$$S = L_u L_v L_w + 2 M_{uv} M_{vw} M_{wu} - L_u M_{vw}^2 - L_v M_{wu}^2 - L_w M_{uv}^2$$

In the case of the motor of the Δ-connection, as described above, the line currents Iuvw are detectable. A relationship between the line currents Iuvw and the phase currents iuvw of the respective phase windings, and a relationship between the time-derivatives of the line currents and the time-derivatives of the phase currents are represented by the following expression (3):

$$\begin{pmatrix} I_u \\ I_v \\ I_w \end{pmatrix} = \begin{pmatrix} i_u - i_w \\ i_v - i_u \\ i_w - i_v \end{pmatrix} \qquad \frac{d}{dt} \begin{pmatrix} I_u \\ I_v \\ I_w \end{pmatrix} = \frac{d}{dt} \begin{pmatrix} i_u - i_w \\ i_v - i_u \\ i_w - i_v \end{pmatrix} \qquad \cdots (3)$$

The above expression (2) is rearranged with this expression, and the derivatives of the line currents Iuvw with time t when the voltage vectors V1(100), V3(010), V5(001) are applied are represented by the following expression (4). However, a term (the second term in the expression (2)) that represents voltage drops due to the electrical resistances R (phase resistances) of the respective phase windings 5uvw is herein ignored, because the voltage drops have values substantially equal to those of the line current derivatives detected during the application of the voltage vector (000) or (111) and can be virtually cancelled by subtraction of the values of the line current derivatives. More specifically, where three-phase position estimation signals Us, Vs, Ws to be described below are defined based on the line current derivatives, the term related to the voltage drops due to the winding resistances R can be omitted. Therefore, the line current derivatives determined with the term of the voltage drops preliminarily omitted are shown for ease of description.

$$
\left[
\begin{aligned}
\frac{d}{dt}\begin{pmatrix}I_u\\I_v\\I_w\end{pmatrix}_{100} &= \frac{V_u}{S}\begin{pmatrix} L_v(L_u+L_w+2M_{wu})-(M_{uv}+M_{vw})^2 \\ -L_v(L_w+M_{wu})-L_wM_{uv}+M_{vw}(L_u+M_{uv}+M_{vw})-(M_{uv}-M_{vw})M_{wu} \\ -L_u(L_v+M_{vw})+M_{uv}(L_w+M_{uv}+M_{vw})-(L_v-M_{uv}+M_{vw})M_{wu} \end{pmatrix} \\
\frac{d}{dt}\begin{pmatrix}I_u\\I_v\\I_w\end{pmatrix}_{010} &= \frac{V_v}{S}\begin{pmatrix} -L_v(L_w+M_{wu})-L_wM_{uv}+M_{vw}(L_u+M_{uv}+M_{vw})-(M_{uv}-M_{vw})M_{wu} \\ L_w(L_u+L_v+2M_{uv})-(M_{vw}+M_{wu})^2 \\ -(L_u+M_{uv})(L_w+M_{vw})+(L_v+M_{uv}+M_{vw})M_{wu}+M_{wu}{}^2 \end{pmatrix} \\
\frac{d}{dt}\begin{pmatrix}I_u\\I_v\\I_w\end{pmatrix}_{001} &= \frac{V_w}{S}\begin{pmatrix} -L_u(L_v+M_{vw})+M_{uv}(L_w+M_{uv}+M_{vw})-(L_v-M_{uv}+M_{vw})M_{wu} \\ -(Lu+M_{uv})(L_w+M_{vw})+(L_v+M_{uv}+M_{vw})M_{wu}+M_{wu}{}^2 \\ L_u(L_v+L_w+2M_{vw})-(M_{uv}+M_{wu})^2 \end{pmatrix}
\end{aligned}
\right] \quad\cdots(4)
$$

Where the three-phase position estimation signals Us, Vs, Ws are generated by using the current derivatives obtained when the three voltage vectors V1(100), V3(010), V5(001) are applied, the three-phase position estimation signals Us, Vs, Ws are defined by the following expression (5). In the expression (5), gu, gv, gw are the current derivative detection gains of the respective line currents. In the expression (5), the three-phase position estimation signals Us, Vs, Ws are each defined by factoring out the phase gain gu, gv, gw from a difference between current derivatives of the same phase.

$$
\begin{pmatrix}Us\\Vs\\Ws\end{pmatrix}=\begin{pmatrix} g_u\left(\frac{d}{dt}Iu_{001}-\frac{d}{dt}Iu_{010}\right) \\ g_v\left(\frac{d}{dt}Iv_{100}-\frac{d}{dt}Iv_{001}\right) \\ g_w\left(\frac{d}{dt}Iw_{010}-\frac{d}{dt}Iw_{100}\right) \end{pmatrix}\quad\cdots(5)
$$

The PWM voltages Vu, Vv, Vw for the three phases (terminal voltages to be applied to the respective phases when the upper arm switching devices are on) are virtually equal to each other and, therefore, V = Vu = Vv = Vw in the expression (4). With the expression (4) put in the expression (5), the three-phase position estimation signals are represented by the following cyclic symmetric polynomial expression (6). The three-phase position estimation signals are defined so that the three phases are equivalently influenced even if the inductances fluctuate due to the magnetic saturation of the motor when a higher torque occurs. Therefore, the position detection error is suppressed.

$$
\begin{pmatrix}Us\\Vs\\Ws\end{pmatrix}=\frac{V}{S}\begin{pmatrix} g_u\left(L_wL_v-L_vL_u+2(L_wM_{uv}-L_uM_{vw}+M_{wu}M_{uv}-M_{vw}M_{wu})+M_{uv}{}^2-M_{vw}{}^2\right) \\ g_v\left(L_uL_w-L_wL_v+2(L_uM_{vw}-L_vM_{wu}+M_{uv}M_{vw}-M_{wu}M_{uv})+M_{vw}{}^2-M_{wu}{}^2\right) \\ g_w\left(L_vL_u-L_uL_w+2(L_vM_{wu}-L_wM_{uv}+M_{vw}M_{wu}-M_{uv}M_{vw})+M_{wu}{}^2-M_{uv}{}^2\right) \end{pmatrix}\quad\cdots(6)
$$

The three voltage vectors for the position detection are not limited to V1(100), V3(010) and V5(001). Where three voltage vectors V2(011), V6(101) and V4(110) are used, for example, the three-phase position estimation signals can be derived in the same manner.

The three-phase position estimation signals may be generated with the use of two voltage vectors. Specifically, where the current derivatives obtained when two voltage vectors V1(001), V3(010) are applied are used, for example, the three-phase position estimation signals can be defined by the following expression (7). Where the current derivative detection gains for the respective phases are different from each other, the three-phase position estimation signals are represented by the following expression (8). Where the current derivative detection gains are equal to each other (g = gu = gv = gw), the three-phase position estimation signals are represented by the following expression (9), which is equivalent to that obtained when the detection gains are all the same in the expression (6).

$$
\begin{pmatrix}Us\\Vs\\Ws\end{pmatrix}=\begin{pmatrix} g_u\frac{d}{dt}Iu_{001}-g_u\frac{d}{dt}Iu_{010} \\ g_u\frac{d}{dt}Iu_{010}-g_v\frac{d}{dt}Iv_{001} \\ g_w\frac{d}{dt}Iw_{010}-g_u\frac{d}{dt}Iu_{001} \end{pmatrix}\quad\cdots(7)
$$

$$\begin{pmatrix} Us \\ Vs \\ Ws \end{pmatrix} = \frac{V}{S} \begin{pmatrix} g_u(L_w L_v - L_v L_u + 2(L_w M_{uv} - L_u M_{vw} + M_{wu} M_{uv} - M_{vw} M_{wu}) + M_{uv}^2 - M_{vw}^2) \\ g_v L_u L_w - g_u L_w L_v + (g_u + g_v)(L_u M_{vw} - L_v M_{wu} + M_{uv} M_{vw} - M_{wu} M_{uv}) + (g_v - g_u)(L_w M_{uv} - M_{vw} M_{wu}) + g_u M_{vw}^2 - g_v M_{wu}^2 \\ g_u L_v L_u - g_w L_u L_w + (g_u + g_w)(L_v M_{wu} - L_w M_{uv} + M_{vw} M_{wu} - M_{uv} M_{vw}) + (g_u - g_w)(L_u M_{vw} - M_{uv} M_{wu}) + g_w M_{wu}^2 - g_u M_{uv}^2 \end{pmatrix}$$
$$\cdots (8)$$

$$\begin{pmatrix} Us \\ Vs \\ Ws \end{pmatrix} = \frac{gV}{S} \begin{pmatrix} L_w L_v - L_v L_u + 2(L_w M_{uv} - L_u M_{vw} + M_{wu} M_{uv} - M_{vw} M_{wu}) + M_{uv}^2 - M_{vw}^2 \\ L_u L_w - L_w L_v + 2(L_u M_{vw} - L_v M_{wu} + M_{uv} M_{vw} - M_{wu} M_{uv}) + M_{vw}^2 - M_{wu}^2 \\ L_v L_u - L_u L_w + 2(L_v M_{wu} - L_w M_{uv} + M_{vw} M_{wu} - M_{uv} M_{vw}) + M_{wu}^2 - M_{uv}^2 \end{pmatrix}$$
$$\cdots (9)$$

Where the current derivatives obtained when the two voltage vectors are applied are used, it is necessary to generate three-phase position estimation signals for two of the three phases by subtraction of a different phase signal, making it impossible to factor out the gains of the current derivative detectors 4uvw. Therefore, where the current derivative detectors 4uvw (current transformers or the like) are configured so that magnetic bodies thereof are saturated by the application of a higher current to thereby reduce the gains, it is difficult to utilize this procedure. Where the gains of the current derivative detectors 4uvw for the respective phases are all the same and are free from fluctuation according to the current value, in contrast, this procedure is effective and advantageous in that the position detection responsiveness is improved by reducing the number of the voltage vectors to be applied for the position detection. As obvious from the above expression (4), relationships represented by the following expression (10) are established. Therefore, by replacement of the terms, the three-phase position estimation signals can be defined in the same manner based on current derivatives obtained when other two voltage vectors are applied.

$$\frac{d}{dt} Iv_{100} = \frac{d}{dt} Iu_{010} \qquad \frac{d}{dt} Iw_{010} = \frac{d}{dt} Iv_{001} \qquad \frac{d}{dt} Iu_{001} = \frac{d}{dt} Iw_{100} \qquad \cdots (10)$$

In any case, where the two voltage vectors are used for the position detection, it is necessary to generate a three-phase position estimation signal for any of the three phases based on a difference between current derivatives of different phases. Therefore, the three-phase position estimation signals are influenced by the gains of the current derivative detectors 4uvw.

The current derivatives of only two of the three phases may be detected, and the current derivative of the remaining one phase may be computed by utilizing a relationship such that the sum of the currents for all the phases is zero.

The estimated rotor position can be determined as represented by the following expression (11) by transforming the three-phase position estimation signals thus determined into two-phase signals and calculating an arc tangent.

$$\begin{pmatrix} \alpha s \\ \beta s \end{pmatrix} = \sqrt{\frac{2}{3}} \begin{pmatrix} 1 & -\frac{1}{2} & -\frac{1}{2} \\ 0 & \frac{\sqrt{3}}{2} & -\frac{\sqrt{3}}{2} \end{pmatrix} \begin{pmatrix} Us \\ Vs \\ Ws \end{pmatrix} \qquad \theta = \mathrm{ArcTan}\left(\frac{\beta s}{\alpha s}\right) \qquad \cdots (11)$$

Self-inductances Lu, Lv, Lw standardized for the respective phases are represented by the following expression (12) by using a motor electrical angle $\theta$ and a standardized inductance amplitude $\alpha$. It is herein assumed that the motor is the surface magnet type motor and mutual inductances are small. The self-inductances Lu, Lv, Lw are each standardized with an inductance offset L0. The offset L0 is represented by L0 = (Ld + Lq)/2 based on inductances Ld, Lq on the dq rotational coordinate system, and an inductance amplitude L1 for each phase is represented by L1 = (Ld - Lq)/2. The standardized inductance amplitude $\alpha$ can be represented by $\alpha$ = L1/L0, which is the ratio of the inductance amplitude L1 to the offset L0.

$$\begin{pmatrix} Lu \\ Lv \\ Lw \end{pmatrix} = \begin{pmatrix} 1 + \alpha \sin\left\{ 2\left(\theta + \frac{2\pi}{3}\right) \right\} \\ 1 + \alpha \sin(2\theta) \\ 1 + \alpha \sin\left\{ 2\left(\theta + \frac{\pi}{3}\right) \right\} \end{pmatrix} \qquad \cdots (12)$$

The three-phase position estimation signals calculated from the above expression (6) with the use of the three voltage vectors are represented by the following expression (13). Where $\alpha \ll 1$ and the term of the second or higher

power of $\alpha$ is ignored, the expression (13) is approximated to the following expression (14). Thus, the three-phase position estimation signals are provided as three-phase sinusoidal signals.

Thus, the estimated position is determined, which has two fluctuation cycles per each electrical angle cycle. Where two voltage vectors are used, the estimated position fluctuates in the same manner.

$$\begin{pmatrix} Us \\ Vs \\ Ws \end{pmatrix} = \frac{4\sqrt{3}}{4 - 3\alpha^2 - \alpha^3 \sin(6\theta)} \begin{pmatrix} g_u \sin(2\theta)\left(\alpha + \alpha^2 \sin\left\{2\left(\theta + \frac{3\pi}{4}\right)\right\}\right) \\ g_v \sin\left(2\theta + \frac{\pi}{3}\right)\left(\alpha + \alpha^2 \sin\left\{2\left(\theta + \frac{\pi}{12}\right)\right\}\right) \\ g_w \sin\left(2\theta + \frac{2\pi}{3}\right)\left(\alpha + \alpha^2 \sin\left\{2\left(\theta + \frac{5\pi}{12}\right)\right\}\right) \end{pmatrix} \cdots (13)$$

$$\begin{pmatrix} Us \\ Vs \\ Ws \end{pmatrix} = \sqrt{3}\alpha \begin{pmatrix} g_u \sin(2\theta) \\ g_v \sin\left\{2\left(\theta + \frac{\pi}{3}\right)\right\} \\ g_w \sin\left\{2\left(\theta + \frac{2\pi}{3}\right)\right\} \end{pmatrix} \cdots (14)$$

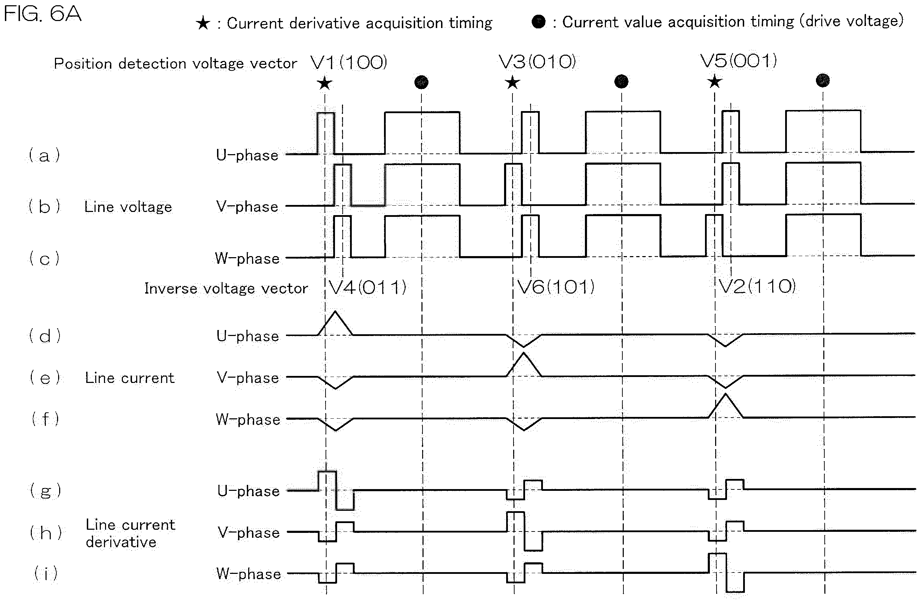

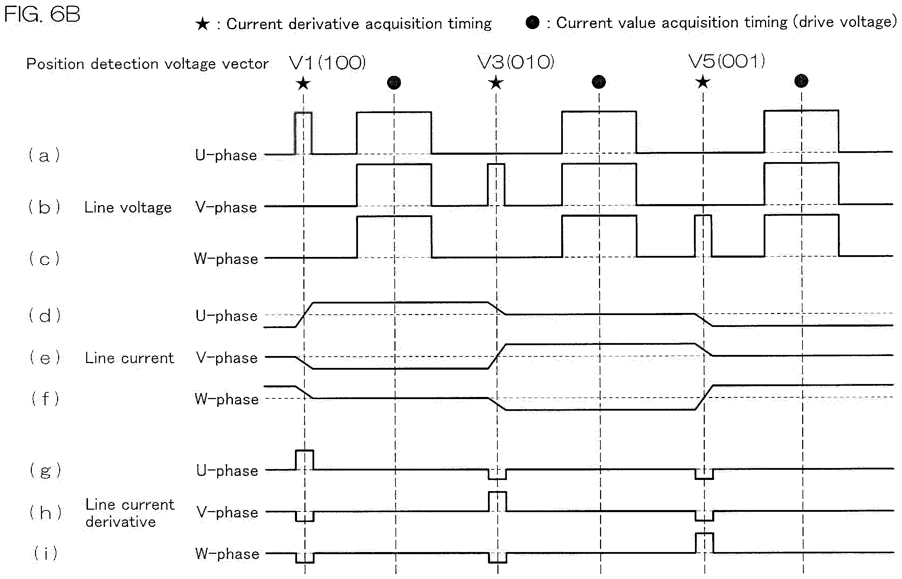

FIGS. 6A and 6B are waveform diagrams showing voltages, currents and current derivatives observed when the AC motor M is rotated at a lower rotation speed (including a halt state) by way of example. In FIGS. 6A and 6B, (a) shows the waveform of a U-phase line voltage applied to the U-phase current line 9u, (b) shows the waveform of a V-phase line voltage applied to the V-phase current line 9v, and (c) shows the waveform of a W-phase line voltage applied to the W-phase current line 9w. Further, in FIGS. 6A and 6B, (d), (e) and (f) respectively show changes in the U-phase line current Iu, the V-phase line current Iv and the W-phase line current Iw outputted by the current detectors 3uvw. In FIGS. 6A and 6B, (g), (h) and (i) respectively show changes in the time-derivatives of the U-phase, V-phase and W-phase line currents, i.e., the U-phase current derivative dIu, the V-phase current derivative dIv and the W-phase current derivative dIw, which respectively correspond to the outputs of the current derivative detectors 4uvw.

As shown in FIG. 3, the inverter 2 is a three-phase inverter including the six switching devices 21uvw, 22uvw, and three terminals connected to the U-phase, V-phase and W-phase windings 5uvw of the AC motor M are connected to either a power supply voltage Vdc (PWM voltage) or a ground potential (0 V). As described above, the state in which the winding 5uvw is connected to the power supply voltage Vdc (i.e., the upper arm switching device 21uvw is on) is represented as "1" and the state in which the winding 5uvw is connected to 0 V (i.e., the upper arm switching device 21uvw is off) is represented by "0." Then, as shown in FIG. 4A, the voltage vectors to be generated include the eight voltage vectors V0(0,0,0) to V7(1,1,1). Of these, the voltage vectors V0(0,0,0) and V7(1,1,1) are zero-voltage vectors for which the voltage applied across the windings 5uvw is zero with all the winding terminals at the same potential. The other six voltage vectors V1 to V6 are non-zero voltage vectors for which a voltage is applied across the windings 5uvw.

The PWM generator 14 generates PWM control signals to turn on and off the switching devices 21uvw, 22uvw of the inverter 2 by comparing the respective phase voltage commands Vuvw outputted from the current controller 13 with a triangular carrier signal. For example, a frequency for the PWM (the frequency of the triangular carrier signal) is 14 kHz, which corresponds to a cycle of about 70 $\mu$sec. When the motor rotation speed is low, the phase voltage commands Vuvw are low, so that the periods of the zero-voltage vectors V0, V7 during which no voltage is applied across the windings 5uvw are prolonged. FIGS. 6A and 6B show waveforms observed when the period T0 of the zero-voltage vector V0 and the period T7 of the zero-voltage vector V7 are each set to about one half the cycle of the PWM and the AC motor M is stopped.

The PWM generator 14 has the function of applying the voltage vectors V1, V3, V5 for the detection of the rotor position (position detection voltage vectors) during the period of the zero voltage vector V0 or V7 in addition to the function of generating the PWM control signals. A period during which the position detection voltage vectors are each applied is sufficiently shorter than the PWM cycle (e.g., about 70 $\mu$sec) and sufficiently shorter than one half the PWM cycle. More specifically, the position detection voltage vector application period is preferably not greater than 10% of the PWM cycle, more preferably not greater than 5% of the PWM cycle.

In order to minimize the influence of the application of the position detection voltage vectors V1, V3, V5, it is preferred to apply inverse voltage vectors V4(011), V6(101), V2 (110) obtained by inverting the position detection voltage vectors V1, V3, V5 for periods equivalent to those of the position detection voltage vectors immediately after the application of the position detection voltage vectors to thereby offset the currents occurring due to the position detection voltage vectors. In the example shown in FIG. 6A, the inverse voltage vectors V4, V6, V2 are applied. In the example shown in FIG. 6B, the inverse voltage vectors V4, V6, V2 are not applied.

The position detection voltage vectors V1, V3, V5, and the inverse voltage vectors V4, V6, V2 for the offset of the position detection voltage vectors V1, V3, V5 are applied in the order of the U-phase, the V-phase and the W-phase in each PWM cycle. Thus, the influence of the application of the position detection voltage vectors can be equalized among the three phases.

As indicated by (d), (e) and (f) in FIGS. 6A and 6B and by (g), (h) and (i) in FIGS. 6A and 6B, the U-phase, V-phase and W-phase currents change, and the U-phase, V-phase and W-phase current derivative detection voltages change according to the application of the position detection voltage vectors (and further according to the application of the inverse voltage vectors in the example shown in FIG. 6A). The current derivatives are detected directly by the current derivative detectors such as the current transformers, whereby the current derivative detection voltages of the respective phases change instantaneously upon the application of the position detection voltage vectors. Therefore, the current derivatives can be each detected substantially during the position detection voltage vector application period (e.g., 3 $\mu$sec). Timings corresponding to the application of the position detection voltage vectors are current derivative acquisition timings (each indicated by a symbol *) at which the current derivatives are to be sampled. The current values of the respective phases are each determined by sampling the output of the current detector 3uvw at a current value acquisition timing (indicated by a symbol ·) during the voltage vector application period for the motor driving.

The current derivatives thus detected are put in the expression (5), whereby the three-phase position estimation signals Us, Vs, Ws can be provided. Further, the motor electrical angle $\theta$ can be computed from the expression (11). The computation is performed by the first position estimator 151 (see FIGS. 2A and 2B). Where two voltage vectors are used, the three-phase position estimation signals Us, Vs, Ws can be computed from the expression (7) instead of the expression (5).

Where the term attributable to the voltage drops due to the winding resistances (the second term in the expression (2)) is to be cancelled, current derivatives may also be acquired for the state corresponding to the voltage vector V7(111) or V0(000), and subtracted from the current derivatives acquired when the position detection voltage vectors V1(100), V3(010), V5(001) are applied.

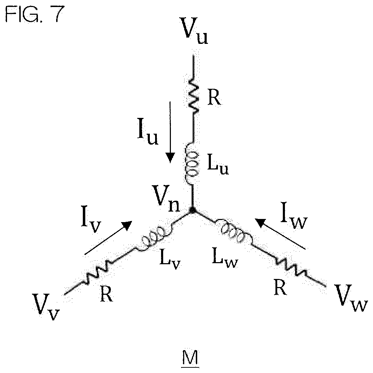

The expansion of the expressions described above is based on the $\Delta$-connection model shown in FIG. 5. In the case of the Y-connection model, expression expansion is provided in substantially the same manner to be described below. A voltage equation for a model shown in FIG. 7 is represented by the following expression (15) with the use of a midpoint potential Vn.

$$\begin{pmatrix} V_u - V_n \\ V_v - V_n \\ V_w - V_n \end{pmatrix} - R \begin{pmatrix} I_u \\ I_v \\ I_w \end{pmatrix} = \begin{pmatrix} L_u & M_{uv} & M_{wu} \\ M_{uv} & L_v & M_{vw} \\ M_{wu} & M_{vw} & L_w \end{pmatrix} \frac{d}{dt} \begin{pmatrix} I_u \\ I_v \\ I_w \end{pmatrix} \qquad \cdots (15)$$

The current derivatives are represented by the following expression (16) by using the inverse matrix of the inductance matrix as in the expression (2).

$$\frac{d}{dt} \begin{pmatrix} I_u \\ I_v \\ I_w \end{pmatrix} = M_{uvw}^{-1} \left( \begin{pmatrix} V_u - V_n \\ V_v - V_n \\ V_w - V_n \end{pmatrix} - R \begin{pmatrix} I_u \\ I_v \\ I_w \end{pmatrix} \right) \qquad \cdots (16)$$

The derivatives of the line currents (which are equal to the phase currents in the case of the Y-connection model) obtained when the position detection voltage vectors V1(100), V3(010), V5(001) are applied are represented by the following expression (17) as derived in the same manner as the expression (4).

$$\left[ \begin{aligned} \frac{d}{dt} \begin{pmatrix} I_u \\ I_v \\ I_w \end{pmatrix}_{100} &= M_{uvw}^{-1} \begin{pmatrix} V_u - V_n \\ -V_n \\ -V_n \end{pmatrix} \\ \frac{d}{dt} \begin{pmatrix} I_u \\ I_v \\ I_w \end{pmatrix}_{010} &= M_{uvw}^{-1} \begin{pmatrix} -V_n \\ V_v - V_n \\ -V_n \end{pmatrix} \\ \frac{d}{dt} \begin{pmatrix} I_u \\ I_v \\ I_w \end{pmatrix}_{001} &= M_{uvw}^{-1} \begin{pmatrix} -V_n \\ -V_n \\ V_w - V_n \end{pmatrix} \end{aligned} \right. \qquad \cdots (17)$$

Here, the expression (16) is solved for the midpoint potential Vn with the use of the following expression (18). Then, the solution is represented by the following expression (19) :

$$I_u + I_v + I_w = 0 \Rightarrow \frac{d}{dt}(I_u + I_v + I_w) = 0 \qquad \cdots (18)$$

$$\left\lfloor \begin{array}{l} V_n = \dfrac{A_u V_u + A_v V_v + A_w V_w}{k} \\[2mm] \left\lceil \begin{array}{l} A_u = L_v(L_w - M_{wu}) - L_w M_{uv} + M_{vw}(M_{wu} + M_{uv}) - M_{vw}^2 \\ A_v = L_w(L_u - M_{uv}) - L_u M_{vw} + M_{wu}(M_{uv} + M_{vw}) - M_{wu}^2 \\ A_w = L_u(L_v - M_{vw}) - L_v M_{wu} + M_{uv}(M_{vw} + M_{wu}) - M_{uv}^2 \\ k = (L_u L_v + L_v L_w + L_w L_u) - 2(L_u M_{vw} + L_v M_{wu} + L_w M_{uv}) + 2(M_{uv}M_{vw} + M_{vw}M_{wu} + M_{uv}M_{wu}) \end{array} \right. \end{array} \right. \qquad \cdots (19)$$

Where the three-phase position estimation signals are each defined by a difference between current derivatives of the same phase as in the expression (5), the following expression (20) is provided, which is a cyclic symmetric polynomial with the gains of the current derivatives factored out as in the expression (6). Therefore, even if the inductances fluctuate due to the magnetic saturation of the motor when a higher torque occurs, the three phases are equivalently influenced by the fluctuation of the inductances in the Y-connection model as in the Δ-connection model. Thus, the position detection error is suppressed. Where the position detection voltage vectors V4(011), V6(101), V2(110) are used, the same result can be provided. Where two position detection voltage vectors are used, the Y-connection model is influenced by the gains of the current derivative detectors 4uvw as in the case of the Δ-connection model.

$$\begin{pmatrix} Us \\ Vs \\ Ws \end{pmatrix} = \frac{v}{S} \begin{pmatrix} g_u \left( M_{uv}(L_w + M_{vw}) - M_{wu}(L_v + M_{vw}) + \dfrac{A_u}{k}(A_v - A_w) \right) \\[3mm] g_v \left( M_{vw}(L_u + M_{wu}) - M_{uv}(L_w + M_{wu}) + \dfrac{A_v}{k}(A_w - A_u) \right) \\[3mm] g_w \left( M_{wu}(L_v + M_{uv}) - M_{vw}(L_u + M_{uv}) + \dfrac{A_w}{k}(A_u - A_v) \right) \end{pmatrix} \qquad \cdots (20)$$

When the UVW fixed coordinate system is shifted to the αβ fixed coordinate system and to the dq rotational coordinate system, the inductance matrix is transformed in the following manner.

A transformation matrix Tαβ and a general inverse matrix T⁺αβ for the transformation from the UVW fixed coordinate system to the αβ fixed coordinate system are defined by the following expression (21):

$$T_{\alpha\beta} = \sqrt{\frac{2}{3}} \begin{pmatrix} 1 & -\dfrac{1}{2} & -\dfrac{1}{2} \\[2mm] 0 & \dfrac{\sqrt{3}}{2} & -\dfrac{\sqrt{3}}{2} \end{pmatrix} \qquad T_{\alpha\beta}^{+} = \sqrt{\frac{2}{3}} \begin{pmatrix} 1 & 0 \\[2mm] -\dfrac{1}{2} & \dfrac{\sqrt{3}}{2} \\[2mm] -\dfrac{1}{2} & -\dfrac{\sqrt{3}}{2} \end{pmatrix} \qquad \cdots (21)$$

Further, a transformation matrix Tdq and an inverse matrix T⁻¹dq for the transformation from the αβ fixed coordinate system to the dq rotational coordinate system are defined by the following expression (22):

$$T_{dq} = \begin{pmatrix} \cos(\theta) & \sin(\theta) \\ -\sin(\theta) & \cos(\theta) \end{pmatrix} \qquad T_{dq}^{-1} = \begin{pmatrix} \cos(\theta) & -\sin(\theta) \\ \sin(\theta) & \cos(\theta) \end{pmatrix} \qquad \cdots (22)$$

Products of the transformation matrixes and their inverse matrixes are represented by the following expression (23) :

$$T_{\alpha\beta}^{+}T_{\alpha\beta} = \begin{pmatrix} 1 & 0 & 0 \\ 0 & 1 & 0 \\ 0 & 0 & 1 \end{pmatrix} + \frac{1}{3}\begin{pmatrix} 1 & 1 & 1 \\ 1 & 1 & 1 \\ 1 & 1 & 1 \end{pmatrix} \qquad T_{dq}^{-1}T_{dq} = \begin{pmatrix} 1 & 0 \\ 0 & 1 \end{pmatrix} \qquad \cdots (23)$$

A phase voltage equation on the UVW fixed coordinate system is represented by the following expression (24) by using a motor induced voltage e. The expression (24) is multiplied on its left side by the αβ transformation matrix Tαβ of the expression (21) to insert a unit matrix between the inductance matrix and the currents, whereby a voltage equation

on the $\alpha\beta$ fixed coordinate system can be defined as represented by the following expression (25):

$$\begin{pmatrix} v_u \\ v_v \\ v_w \end{pmatrix} = R \begin{pmatrix} i_u \\ i_v \\ i_w \end{pmatrix} + \frac{d}{dt}\left\{\begin{pmatrix} L_u & M_{uv} & M_{wu} \\ M_{uv} & L_v & M_{vw} \\ M_{wu} & M_{vw} & L_w \end{pmatrix}\begin{pmatrix} i_u \\ i_v \\ i_w \end{pmatrix}\right\} + \begin{pmatrix} e_u \\ e_v \\ e_w \end{pmatrix} \quad \cdots (24)$$

$$T_{\alpha\beta}\begin{pmatrix} v_u \\ v_v \\ v_w \end{pmatrix} = RT_{\alpha\beta}\begin{pmatrix} i_u \\ i_v \\ i_w \end{pmatrix} + \frac{d}{dt}\left\{T_{\alpha\beta}\begin{pmatrix} L_u & M_{uv} & M_{wu} \\ M_{uv} & L_v & M_{vw} \\ M_{wu} & M_{vw} & L_w \end{pmatrix}\left[T_{\alpha\beta}^+ T_{\alpha\beta} - \frac{1}{3}\begin{pmatrix} 1 & 1 & 1 \\ 1 & 1 & 1 \\ 1 & 1 & 1 \end{pmatrix}\right]\begin{pmatrix} i_u \\ i_v \\ i_w \end{pmatrix}\right\} + T_{\alpha\beta}\begin{pmatrix} e_u \\ e_v \\ e_w \end{pmatrix}$$

$$\Rightarrow \begin{pmatrix} v_\alpha \\ v_\beta \end{pmatrix} = R\begin{pmatrix} i_\alpha \\ i_\beta \end{pmatrix} + \frac{d}{dt}\left\{\begin{pmatrix} L_\alpha & M_{\alpha\beta} \\ M_{\beta\alpha} & L_\alpha \end{pmatrix}\begin{pmatrix} i_\alpha \\ i_\beta \end{pmatrix}\right\} + \begin{pmatrix} e_\alpha \\ e_\beta \end{pmatrix} \quad \cdots (25)$$

With iu + iv + iw = 0, the following expression (26) is established, so that only the first term of the first expression in the expression (23) remains. Therefore, the product $T^+\alpha\beta\cdot T\alpha\beta$ of the $\alpha\beta$ transformation matrixes is a unit matrix. This is utilized here.

$$\begin{pmatrix} 1 & 1 & 1 \\ 1 & 1 & 1 \\ 1 & 1 & 1 \end{pmatrix}\begin{pmatrix} i_u \\ i_v \\ i_w \end{pmatrix} = \begin{pmatrix} 0 \\ 0 \\ 0 \end{pmatrix} \quad \cdots (26)$$

Similarly, the expression (25) which is the phase voltage equation on the $\alpha\beta$ fixed coordinate system is multiplied on its left side by the dq transformation matrix Tdq (expression (22)) to insert a unit matrix (see the second expression in the expression (23)), whereby a voltage equation on the dq rotational coordinate system is provided as represented by the following expression (27):

$$T_{dq}\begin{pmatrix} v_\alpha \\ v_\beta \end{pmatrix} = T_{dq}\begin{pmatrix} i_\alpha \\ i_\beta \end{pmatrix} + \frac{d}{dt}\left\{T_{dq}\begin{pmatrix} L_\alpha & M_{\alpha\beta} \\ M_{\beta\alpha} & L_\alpha \end{pmatrix}T_{dq}^{-1}T_{dq}\begin{pmatrix} i_\alpha \\ i_\beta \end{pmatrix}\right\} + T_{dq}\begin{pmatrix} e_\alpha \\ e_\beta \end{pmatrix}$$

$$\Rightarrow \begin{pmatrix} v_d \\ v_q \end{pmatrix} = R\begin{pmatrix} i_d \\ i_q \end{pmatrix} + \frac{d}{dt}\left\{\begin{pmatrix} L_d & M_{dq} \\ M_{qd} & L_q \end{pmatrix}\begin{pmatrix} i_d \\ i_q \end{pmatrix}\right\} + \begin{pmatrix} e_d \\ e_q \end{pmatrix} \quad \cdots (27)$$

With the expressions (25) and (27) thus derived, inductance matrixes $M\alpha\beta$, Mdq on the respective coordinate systems can be defined as represented by the following expression (28):

$$M_{\alpha\beta} = T_{\alpha\beta}M_{uvw}T_{\alpha\beta}^+ \qquad M_{dq} = T_{dq}M_{\alpha\beta}T_{dq}^{-1} \quad \cdots (28)$$

Here, components m, n, s are defined as represented by the following expression (29) containing inductance components on the UVW coordinate system:

$$\left[\begin{array}{l} m = \dfrac{1}{6}\left(2L_u - L_v - L_w - 2(M_{uv} - M_{vw} + M_{wu})\right) \\[2mm] n = \dfrac{1}{2\sqrt{3}}\left(-L_v + L_w + 2(M_{uv} - M_{wu})\right) \\[2mm] s = \dfrac{1}{3}\left(L_u + L_v + L_w - M_{uv} - M_{vw} - M_{wu}\right) \end{array}\right. \quad \cdots (29)$$

The inductance matrixes on the respective coordinate systems are computed from the expression (28) and, with the use of m, n, s in the expression (29), inductances on the $\alpha\beta$ fixed coordinate system and on the dq rotational coordinate system are respectively represented by the following expressions (30) and (31):

$$\begin{pmatrix} L_\alpha & M_{\alpha\beta} \\ M_{\beta\alpha} & L_\alpha \end{pmatrix} = \begin{pmatrix} s & 0 \\ 0 & s \end{pmatrix} + \begin{pmatrix} m & n \\ n & -m \end{pmatrix} \qquad \cdots (30)$$

$$\begin{pmatrix} L_d & M_{dq} \\ M_{qd} & L_q \end{pmatrix} = \begin{pmatrix} s & 0 \\ 0 & s \end{pmatrix} + \begin{pmatrix} m & n \\ n & -m \end{pmatrix} \begin{pmatrix} \cos(2\theta) & \sin(2\theta) \\ -\sin(2\theta) & \cos(2\theta) \end{pmatrix} \quad \cdots (31)$$

Further, the transformation of the inductances from the $\alpha\beta$ fixed coordinate system to the dq rotational coordinate system is represented by the following expression (32) :

$$\begin{pmatrix} L_d - s & M_{dq} \\ M_{qd} & L_q - s \end{pmatrix} = \begin{pmatrix} L_\alpha - s & M_{\alpha\beta} \\ M_{\beta\alpha} & L_\alpha - s \end{pmatrix} \begin{pmatrix} \cos(2\theta) & -\sin(2\theta) \\ \sin(2\theta) & \cos(2\theta) \end{pmatrix} \quad \cdots (32)$$

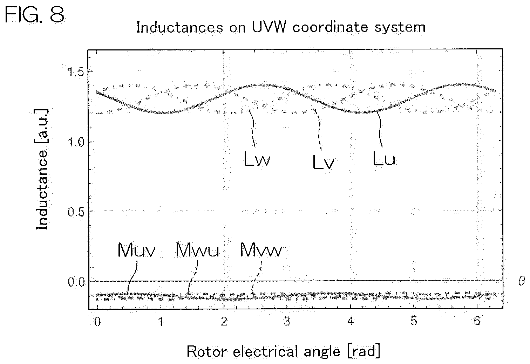

FIG. 8 shows ideal sinusoidal waveform inductances on the UVW fixed coordinate system by way of example. In this example, it is assumed that self-inductances and mutual inductances have amplitudes of 0.1 and 0.02, respectively, and offsets of 1.3 and -0.11, respectively, and each have a sinusoidal waveform with a phase shift of 120 degrees.

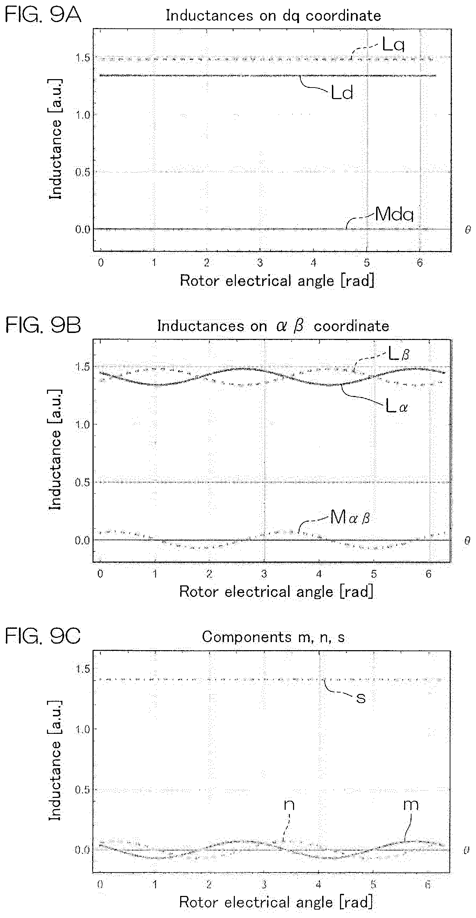

For the ideal sinusoidal waveform inductances, the inductances $L\alpha$, $L\beta$, $M\alpha\beta$ on the $\alpha\beta$ fixed coordinate system, the inductances Ld, Lq, Mdq on the dq rotational coordinate system, and the components m, n, s are computed by using the expressions (29), (30) and (31), and are plotted as shown in FIGS. 9A, 9B and 9C. As generally known, the inductances Ld, Lq on the dq rotational coordinate system are not dependent on the rotor position, and are Ld = 1.48 and Lq = 1.34, respectively, in this example. Further, the saliency ratio is Lq/Ld = 1.10.

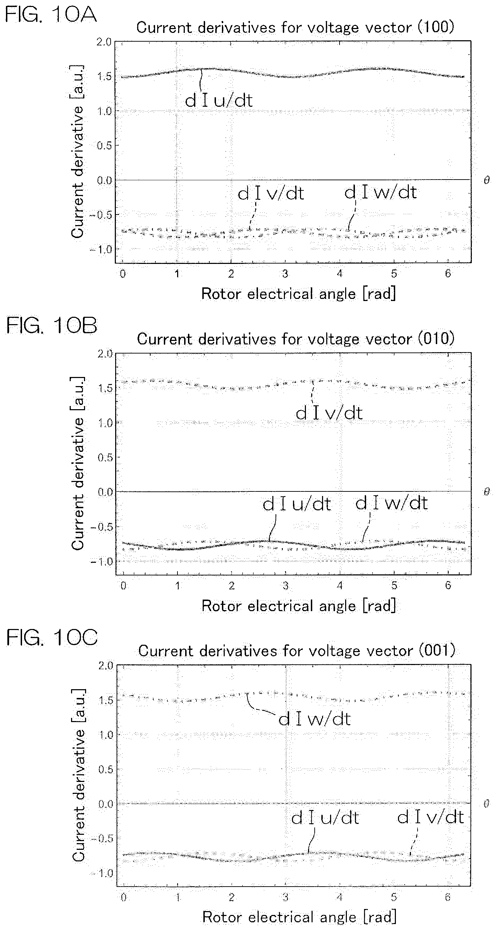

Further, the current derivatives are computed from the expression (4) based on the ideal sinusoidal waveform inductances shown in FIG. 8. The results of the computation are shown in FIGS. 10A, 10B and 10C. FIG. 10A shows the current derivatives to be obtained when the voltage vector V1(100) is applied, and FIG. 10B shows the current derivatives to be obtained when the voltage vector V3(010) is applied. FIG. 10C shows the current derivatives to be obtained when the voltage vector V5(001) is applied. FIGS. 10A, 10B and 10C show changes in the U-phase, V-phase and W-phase current derivatives with respect to the rotor electrical angle. The detection gain and the voltage gain are 1.

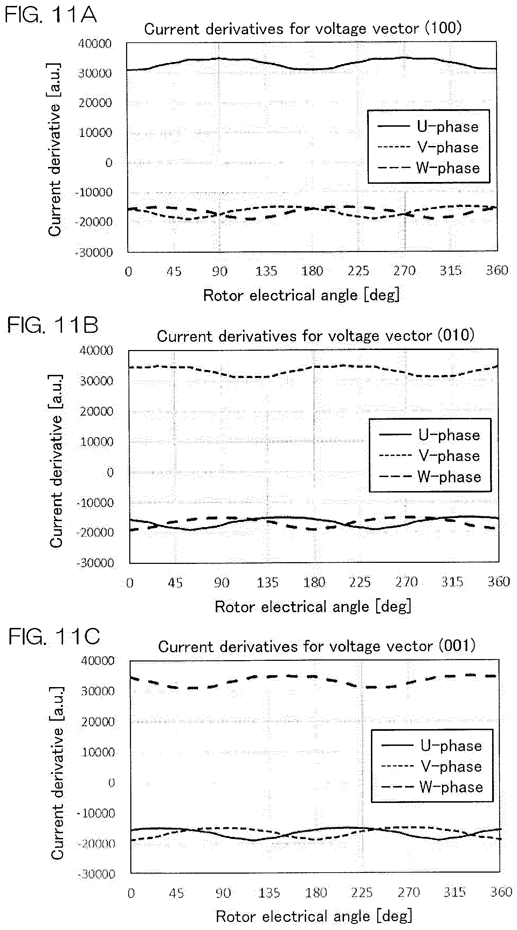

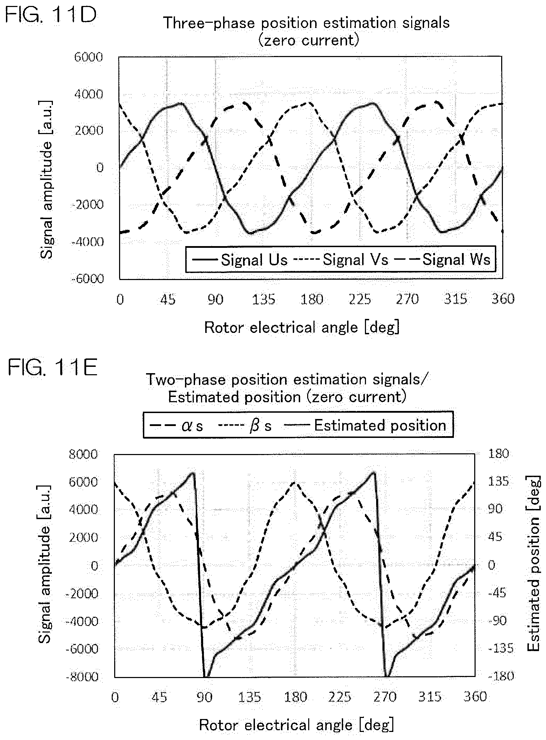

By way of example, current derivatives determined by a magnetic analysis performed by inputting the aforementioned three voltage vectors to a three-phase surface magnet type motor and changing the rotor position in one rotation cycle of electrical angle with the motor q-axis current maintained at zero, and an estimated position computed from the expressions (5) and (11) are shown in FIGS. 11A to 11E. FIG. 11A shows current derivatives obtained when the voltage vector V1(100) was applied, and FIG. 11B shows current derivatives obtained when the voltage vector V3(010) was applied. FIG. 11C shows current derivatives obtained when the voltage vector V5(001) was applied, and FIG. 11D shows three-phase position estimation signals Us, Vs, Ws computed from the expression (5). Further, FIG. 11E shows two-phase position estimation signals $\alpha$s, $\beta$s on the $\alpha\beta$ fixed coordinate system computed from the expression (11), and an estimated position $\theta$ determined based on the two-phase position estimation signals $\alpha$s, $\beta$s. The three-phase position estimation signals Us, Vs, Ws, which each have a waveform superposed with a harmonic waveform, can be each virtually regarded as a sinusoidal waveform. Thus, the estimated position $\theta$ can be computed.

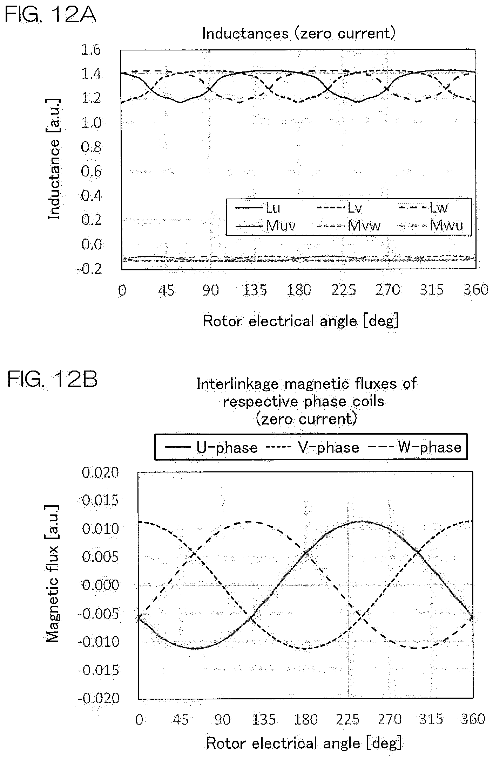

FIGS. 12A and 12B respectively show motor inductances Lu, Lv, Lw, Muv, Mvw, Mwu and interlinkage magnetic fluxes of the respective phase coils (windings) determined by the magnetic analysis performed under the conditions used for FIGS. 11A to 11E. A comparison with FIG. 8 indicates that the three-phase position estimation signals Us, Vs, Ws of FIG. 11D are not in an ideal sinusoidal waveform because the waveforms of the inductances are offset from the ideal sinusoidal waveforms and a higher-order term of the ratio $\alpha$ between the offset amount of the inductance and the amplitude of the inductance (standardized inductance amplitude) is contained in the expression (13).

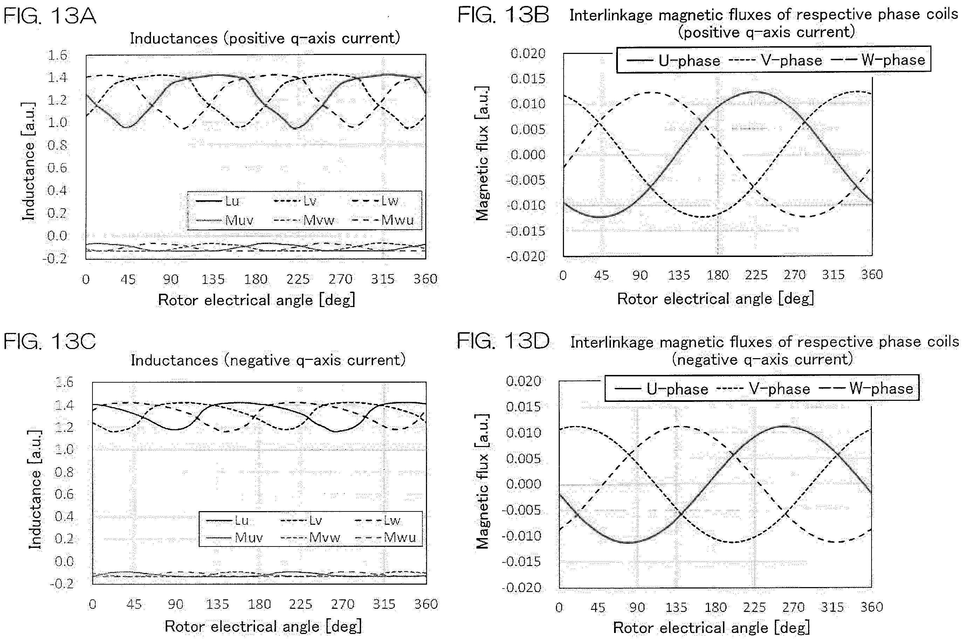

Next, the results of an analysis performed in substantially the same manner as described above with a positive or negative motor q-axis current are shown in FIGS. 13A, 13B, 13C and 13D. FIGS. 13A and 13B show motor inductances Lu, Lv, Lw, Muv, Mvw, Mwu and interlinkage magnetic fluxes of the respective phase coils (windings) determined by the magnetic analysis performed with the positive q-axis current. FIGS. 13C and 13D show motor inductances Lu, Lv, Lw, Muv, Mvw, Mwu and interlinkage magnetic fluxes of the respective phase coils (windings) determined by the magnetic analysis performed with the negative q-axis current. In these figures, the positive and negative rotor electrical angles are defined such that, when the q-axis current is positive under no-load conditions, the rotor electrical angle advances in a plus direction (angle advance direction). In other words, a direction in which the torque is generated when the q-axis current is positive is defined as the positive direction of the rotor electrical angle.

It can be seen that the interlinkage magnetic fluxes of the coils are shifted in the angle advance direction (torque generation direction) with the positive q-axis current, and shifted in an angle retard direction (torque generation direction) with the negative q-axis current as compared with a q-axis current of zero. The inductances may vary in amplitude depending on the direction (positive or negative direction) of the magnetic resistance along the d-axis, or may contain a harmonic component due to slot combination. However, it may be generally considered that the phases of the self-inductances Lu, Lv, Lw and the phases of the mutual inductances Muv, Mvw, Mwu are shifted in the same directions as the phases of the interlinkage magnetic fluxes of the coils.

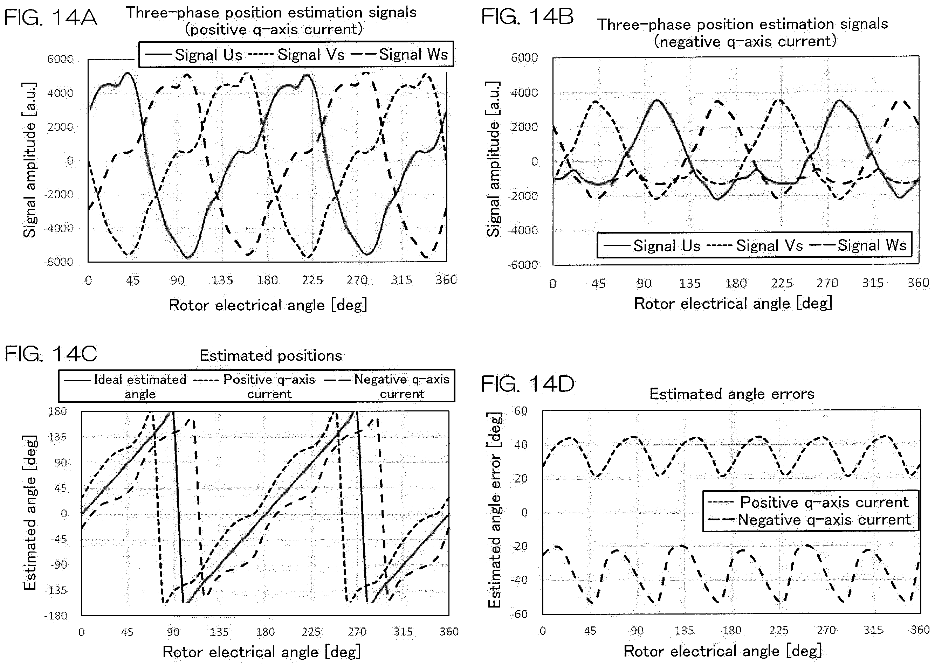

Three-phase position estimation signals and an estimated position determined by an analysis performed by applying a q-axis current are shown in FIGS. 14A, 14B and 14C. FIG. 14A shows three-phase position estimation signals Us, Vs, Ws computed from the expression (5) for the positive q-axis current. FIG. 14B shows three-phase position estimation signals Us, Vs, Ws computed from the expression (5) for the negative q-axis current. FIG. 14C shows estimated positions θ computed from the expression (11) for the positive q-axis current and for the negative q-axis current. In FIG. 14C, an ideal estimation angle is also shown, which is a rotor electrical angle (analytic true value) used for the analysis. FIG. 14D shows the deviations of the estimated positions from the ideal estimation angle (estimated angle errors) for the positive q-axis current and for the negative q-axis current.

As shown, with the phase shift of the inductances, the estimated position θ is deviated from the ideal estimation angle in the positive direction (torque generation direction) when the q-axis current is positive, and is deviated from the ideal estimation angle in the negative direction (torque generation direction) when the q-axis current is negative. As the deviation of the estimated position θ from the ideal estimation angle increases, the torque is reduced, resulting in the step-out of the motor in the worst case.

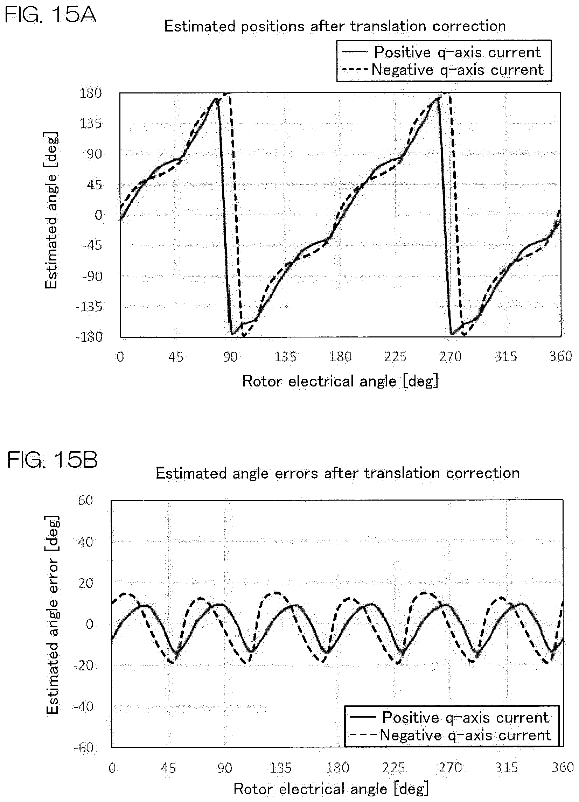

To cope with this, a correction amount represented by a function of the q-axis current is incorporated. For example, a correction amount C1 (C1 = k·Iq) is determined by multiplying the q-axis current value Iq by a proportionality constant k (k > 0), and translation correction (first correction) is performed by subtracting the correction amount C1 from the uncorrected estimated position θ. In the translation correction, the estimated position θ is shifted in the torque generation direction by the absolute value of the correction amount C1 (first correction amount). Estimated positions $\theta_{C1}$ (= θ - C1) corrected by the translation correction when the q-axis current is positive and when the q-axis current is negative are shown in FIG. 15A. Further, deviations of the estimated positions $\theta_{C1}$ corrected by the translation correction from the ideal estimation angle (estimated angle errors) are shown in FIG. 15B.

The estimated angle errors (see FIG. 14D), which are about ±50 degrees before the correction, are reduced within ±20 degrees. As shown, the problem of the estimation error attributable to the inductance phase shift due to the increase in the q-axis current (the increase in the absolute value) can be solved by this correction.

In this example, the proportional expression is used as the function of the q-axis current. Alternatively, the translation correction may be performed by incorporating a correction amount determined by utilizing a function containing a higher-order term of the q-axis current. This makes it possible to provide a value closer to the ideal estimation value according to the change in the q-axis current.

After the estimated position $\theta_{C1}$ corrected by the translation correction is thus computed, the estimation error is reduced by further performing a harmonic correction (second correction).

For example, a correction amount C2 containing a n-th harmonic (wherein n is a natural number of 2 or greater, e.g., n = 3) with respect to the estimated position θ is incorporated as a harmonic correction amount. More specifically, a harmonic correction amount C2 (second correction amount) represented by the following expression (33) is incorporated as an n-th harmonic having an amplitude equivalent to the q-axis current value Iq. The harmonic correction amount C2 is a function of the estimated position θ and the q-axis current value Iq, more specifically, a product of a function of the q-axis current value and a harmonic component having a phase defined by the estimated position θ (i.e., the estimated position $\theta_{C1}$ corrected by the translation correction). The function of the q-axis current value is the q-axis current value itself in the following expression (33) but, for example, may be a function of the q-axis current value multiplied by a proportionality constant or may be a function containing a higher-order term.

$$C2 = \mathrm{Sin}\,(n\,\theta_{C1} + \delta) \times Iq \quad \cdots (33)$$

The harmonic correction amount C2 is further subtracted from the estimated position $\theta_{C1}$ corrected by the translation correction, whereby an estimated position $\theta_{C2}$ corrected by the harmonic correction is represented by the following expression (34):

$$\theta_{C2} = \theta_{C1} - Iq \cdot \mathrm{Sin}(n\theta_{C1} + \delta) = \theta - C1 - Iq \cdot \mathrm{Sin}(n(\theta - C1) + \delta) \quad \cdots (34)$$

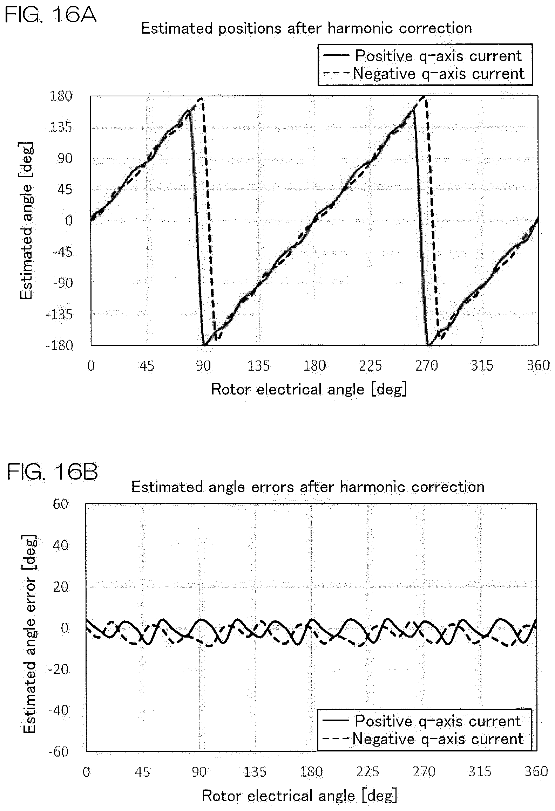

Where n = 3, corrected estimated positions $\theta_{C2}$ and estimated angle errors for the positive q-axis current and for the negative q-axis current are respectively shown in FIGS. 16A and 16B. Here, a phase offset δ may be selected so as to reduce the estimation errors.

As shown in FIG. 16B, the estimated position errors are reduced within ± 8 degrees by performing the harmonic correction in addition to the translation correction. Thus, the torque ripples attributable to the estimated position errors can be reduced. In the harmonic correction in the example shown in FIGS. 16A and 16B, only the third harmonic is reduced, but a higher harmonic correction may be performed. As in the translation correction, the estimated position errors can be further reduced by performing a correction with the use of a correction amount defined by a function containing a higher-order term of the q-axis current.

Further, where the inductance phase shift due to the q-axis current is small, only the harmonic correction may be performed with the translation correction omitted. In this case, C1 = 0 and, therefore, the corrected estimated position $\theta_{C2}$ is represented by the following expression (35) :

$$\theta_{c2} = \theta - \mathrm{Iq} \cdot \mathrm{Sin}(n\theta + \delta) \quad \ldots (35)$$

Alternatively, only the translation correction may be performed without the harmonic correction omitted.

In the above example, the correction amounts C1, C2 are defined with the use of the functions based on the q-axis current value Iq and the uncorrected estimated position $\theta$. The correction amounts may be preliminarily tabulated rather than determined with the use of the functions. Further, the corrected estimated position per se may be tabulated rather than determined by generating the correction amounts with the use of the functions or the tables of the correction amounts.

The translation correction and/or the harmonic correction are performed by the first compensator 161 (see FIG. 2A), whereby the corrected estimated position $\theta_{1C}$ is generated. That is, the estimated position $\theta_{1C}$ may be $\theta_{1C} = \theta_{C2}$. Where only the translation correction is performed, the estimated position $\theta_{1C}$ is $\theta_{1C} = \theta_{C1}$.

The above example is directed to the surface magnet type motor. Where an embedded magnet type motor is used, the shifts of inductance waveforms due to the shifts of the interlinkage magnetic fluxes of the coils, and the superposition of the harmonic component on the estimated value similarly occur more or less.

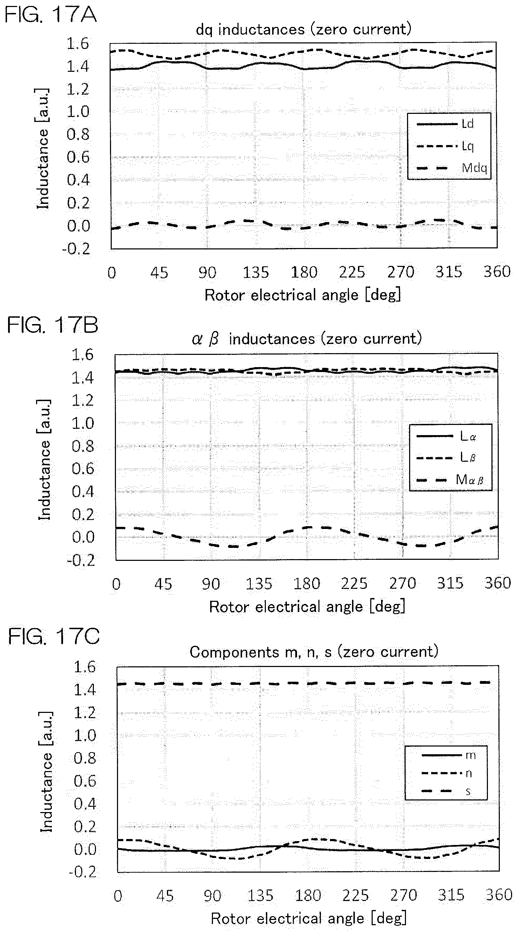

FIGS. 17A and 17B show the results of the transformation of the inductances on the UVW fixed coordinate system shown in FIG. 12A to inductances on the $\alpha\beta$ fixed coordinate system and on the dq rotational coordinate system, respectively, by using the expressions (29), (30) and (31). FIG. 17C shows relevant components m, n, s.

Since the changes in the inductances shown in FIG. 12A are not in a perfect sinusoidal waveform, the inductances Ld, Lq on the dq rotational coordinate system are dependent on the rotor position. In addition, the mutual inductance Mdq which is a dq-axis interference component is not zero. As determined from the results shown in FIG. 17A, average inductances Ld and Lq with respect to the rotor electrical angle are Ld = 1.4 and Lq = 1.5, respectively, and an average saliency ratio Lq/Ld is Lq/Ld = 1.07.

This indicates that the position estimation can be achieved with satisfactory accuracy even in the case of the surface magnet type motor which has a smaller saliency ratio, e.g., has a saliency ratio of about 7% on average without excitation and has a saliency ratio of about 1% depending on the rotor electrical angle.

A three-phase surface magnet type motor having the same conditions as specified in the aforementioned analyses was prepared as an actual model motor, and the PWM patterns were applied to this motor. Current transformers each having a gain variable due to the magnetic saturation depending on the current magnitude were used as the current derivative detectors 4uvw to acquire the current derivatives for the position estimation. The results are shown below.

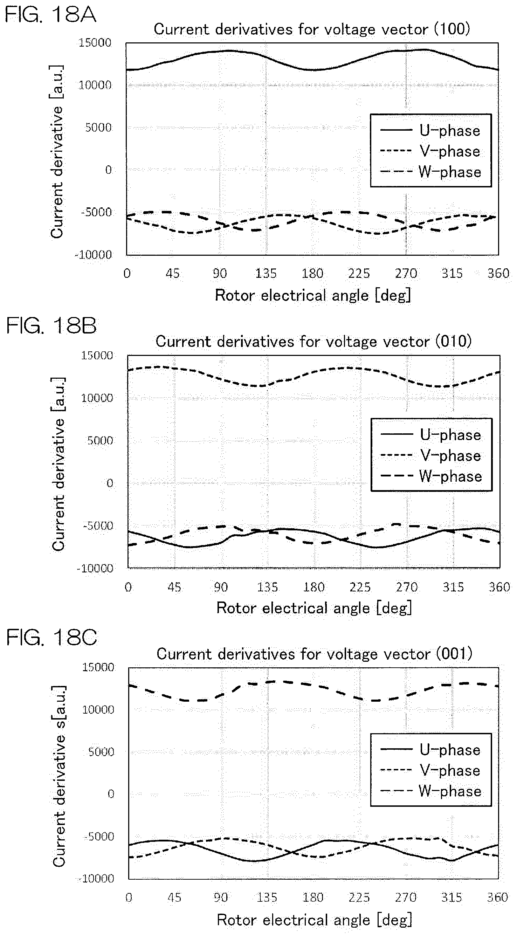

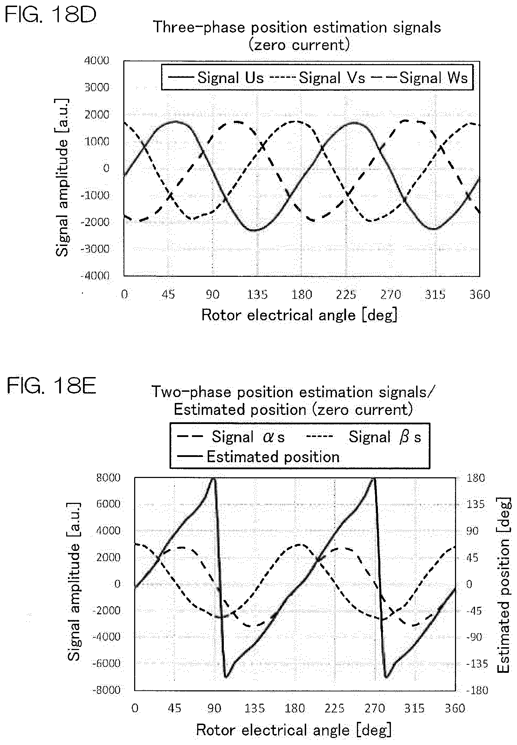

FIGS. 18A, 18B and 18C respectively show current derivatives obtained by using the three voltage vectors V1(100), V3(010), V5(001) with the motor current maintained at zero. FIG. 18D shows three-phase position estimation signals Us, Vs, Ws each obtained based on a difference between current derivatives of the same phase from the expression (5). FIG. 18E shows an estimated position computed from the expression (11) based on the three-phase position estimation signals Us, Vs, Ws. When the current is zero, the estimated position can be computed as indicated by the results of the analyses.

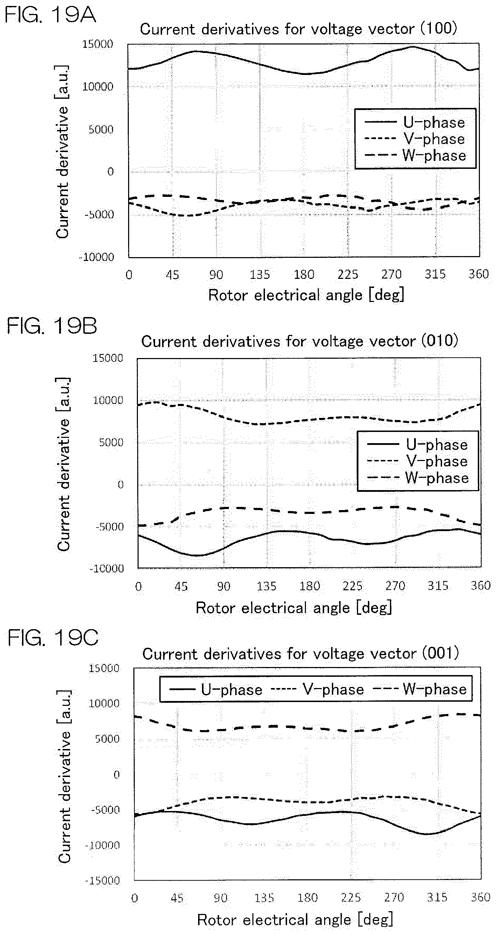

FIGS. 19A, 19B and 19C show current derivatives acquired when the motor was forcibly externally rotated by applying a zero current, a positive current and a negative current to the U-phase, V-phase and W-phase motor lines, respectively, by fixed phase excitation. FIGS. 19A, 19B and 19C respectively show current derivatives acquired when the voltage vectors V1(100), V3(010), V5(001) were applied. A relationship between the rotor electrical angle on the abscissa and the excitation angle phase is such that a rotor electrical angle of 0 degree corresponds to d-axis excitation, a rotor electrical angle of 90 degrees corresponds to q-axis excitation, and a rotor electrical angle of 180 degrees corresponds to d-axis reverse excitation.

For example, a comparison among a U-phase signal for the pattern of the voltage vector V1(100) (see FIG. 19A), a V-phase signal for the pattern of the voltage vector V3(010) (see FIG. 19B) and a W-phase signal for the pattern of the voltage vector V5(001) (see FIG. 19C) which intrinsically have the same signal level indicates that the V-phase signal and the W-phase signal are each attenuated to about one half the ideal level due to the saturation of the magnetic bodies of the current transformers of the current derivative detectors 4uvw.

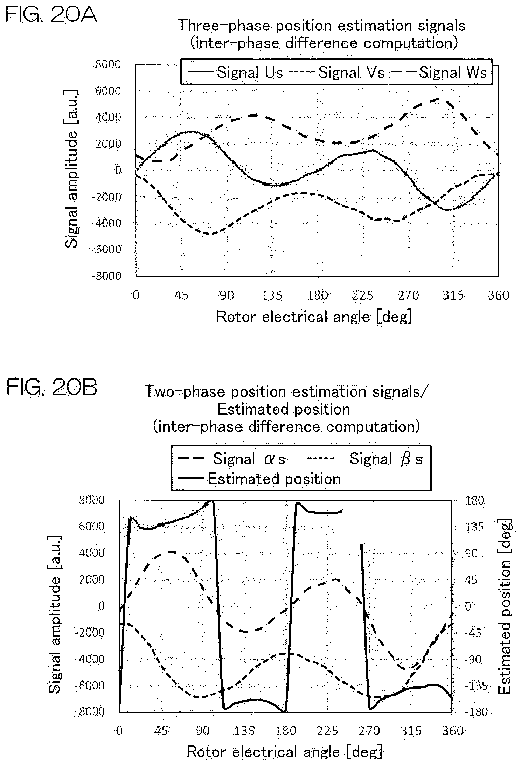

FIG. 20A shows three-phase position estimation signals Us, Vs, Ws defined based on the current derivatives of FIGS. 18A, 18B and 18C by the expression (7) using only two voltage vectors V5(001), V3(010). FIG. 20B shows an estimated position θ computed from the expression (11) based on the three-phase position estimation signals Us, Vs, Ws.

As can be understood from the expression (7), the signals Vs, Ws each contain a difference between the current derivatives of different phases and, therefore, contain different gains. The subtraction of the signals having the different gains makes it impossible to properly compute the three-phase signals and, hence, to correctly compute the estimated position.

The three-phase position estimation signals seem to be simply offset. In this example, the V-phase current and the W-phase current have the same absolute value. Therefore, it is considered that the three-phase position estimation signals behave in the same manner as in the case where the V-phase and the W-phase have the same gain and the offset occurs. In reality, however, the U-phase current, the V-phase current and the W-phase current change with time, and the gains of the respective phases also behave without specific limitations. In reality, therefore, the three-phase position estimation signals change in a complicated manner according to the motor current due to the terms of the sums and the differences in the expression (8). This makes it difficult to correct the three-phase position estimation signals.

Therefore, where the two voltage vectors are used for the detection of the rotor position, it is preferred to use current derivative detectors each including an element configured to avoid the saturation of the magnetic body. For example, it is preferred to use an element such as a current transformer including an air-core coil.

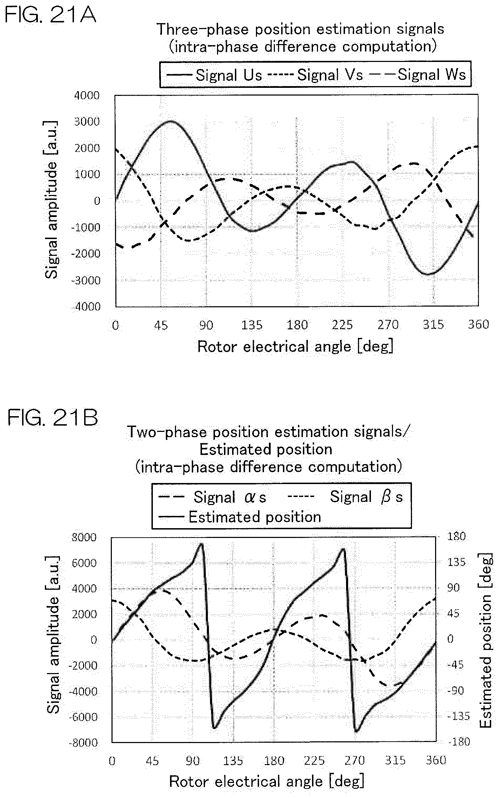

FIG. 21A shows three-phase position estimation signals Us, Vs, Ws each defined based on a difference between current derivatives of the same phase in FIGS. 18A, 18B and 18C by using the expression (5) by way of example. FIG. 21B shows an estimated position computed based on the three-phase position estimation signals Us, Vs, Ws from the expression (11). As shown, it is possible to compute the estimated position while suppressing the influence of the gains of the current derivative detectors 4uvw by the subtraction of the signals of the same phase. The deviation of the estimated position is attributable to the gains gu, gv, gw factored out from the respective expressions in the expression (6). Specifically, the gains gv, gw are about one half the gain gu, so that the amplitudes of the three-phase position estimation signals Vs, Ws are about one half the amplitude of the three-phase position estimation signal Us. This is the cause of the deviation of the estimated position.

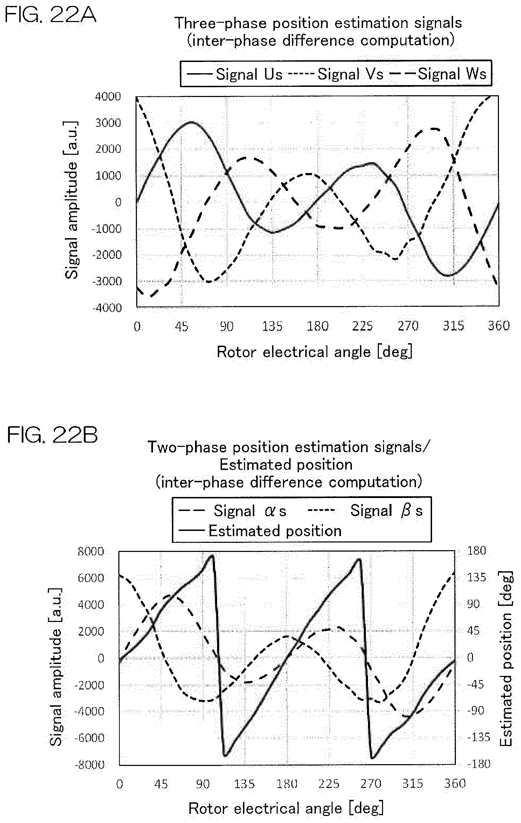

The deviation can be easily corrected simply by multiplying the three-phase position estimation signals by gains according to the current. Three-phase position estimation signals Us, Vs, Ws recomputed with the signals Vs, Ws of FIG. 21A amplified twice are shown in FIG. 22A, and an estimated position recomputed from the expression (11) based on the recomputed three-phase position estimation signals Us, Vs, Ws is shown in FIG. 22B. As shown, the three-phase position estimation signals of the three phases are each in a symmetrical shape, and the deviation of the estimated position is eliminated.

The correction by the multiplication of the three-phase position estimation signals by the gains according to the current may be replaced with a correction through computation by variably setting the current derivative detection gains gu, gv, gw (hereinafter often referred to generally as "gain(s) guvw") according to the current. For example, the gains guvw for the respective motor phases may be determined based on the absolute values |Iuvw| of the line currents Iuvw of the respective motor phases according to the function represented by the following expression (36) . According to the function of the expression (36), when the absolute value of the line current Iuvw of a phase is not greater than a first constant $I_1$ ($I_1 > 0$), a gain guvw for the phase is a constant first gain $g_1$ ($g_1 > 0$). When the absolute value of the line current Iuvw of a phase is greater than a second constant $I_2$ ($I_2 > I_1$), a gain guvw for the phase is a constant second gain $g_2$ ($g_2 > g_1$). Further, when the absolute value of the line current Iuvw of a phase is greater than the first constant $I_1$ and not greater than the second constant $I_2$, a gain guvw for the phase linearly varies between the first gain $g_1$ and the second gain $g_2$ according to the absolute value of the line current Iuvw of the phase.

$$ g_{uvw} = \begin{cases} g_1 & (0 \leq |I_{uvw}| \leq I_1) \\ \dfrac{(g_1 - g_2)|I_{uvw}| - g_1 I_2 + g_2 I_1}{I_1 - I_2} & (I_1 < |I_{uvw}| \leq I_2) \qquad \dots (36) \\ g_2 & (I_2 < |I_{uvw}|) \end{cases} $$

The constants $I_1$, $I_2$, $g_1$, $g_2$ may be defined by preliminarily measuring the current derivative detection gains for the motor current and fitting the resulting measurements in the expression (36). Further, the results of the fitting may be tabulated, and the gains guvw for the respective phases may be determined according to the current with reference to the resulting table.

The gains guvw may be defined by a function additionally containing a higher-order term in the expression (36).

The gains of the current derivative detectors 4uvw do not influence the change in the signal amplitude. At an electrical angle of 0 degree, the d-axis excitation occurs to enhance the magnetic flux of the magnet. At an electrical angle of 180 degrees, the d-axis reverse excitation occurs in such a direction as to reduce the magnetic flux of the magnet. A magnet-free state is approached by the reduction of the magnetic flux of the magnet, whereby the position dependence of the inductance occurring due to the saturation of the core is eliminated. Therefore, the signal amplitude is changed.

The correction is performed by multiplying the three-phase position estimation signals by the gains according to the current. Thus, detection elements such as current transformers including magnetic bodies can be used for the current derivative detectors 4uvw, even if the current ripples are minute. This makes it possible to detect the current derivatives at a higher sensitivity.

Even without the use of the current derivative detection elements such as the current transformers, it is generally difficult to completely equalize the current derivative detection gains for all the U-phase, the V-phase and the W-phase. Where the three-phase current derivative detection gains are different from each other, the position estimation error can be reduced by the aforementioned computation process.

In the aforementioned sensorless control utilizing the estimated position, there is an uncertainty occurring because the estimated position appears twice in the form of two-cycle signal in each motor electrical angle cycle. Therefore, the initial excitation position is liable to have an opposite phase. If this is problematic, for example, an initial position estimation method utilizing magnetic saturation (see, for example, NPL 2) may be used in combination with the aforementioned computation process to determine the initial excitation position. In this embodiment, the estimated position is determined on the $\alpha\beta$ fixed coordinate system. Therefore, if the excitation phase offset of the initial excitation due to the opposite phase of the initial excitation position is not problematic, the two-cycle signal of the estimated position is converted to a one-cycle signal, which may be directly used on the dq transformation coordinate system. Thus, the motor can be rotated in synchronism without performing the initial position estimation.

Next, a specific example of the position estimation (second estimation method) to be performed by the second position estimator 152 will be described.

In this embodiment, the second position estimator 152 estimates the rotor position on the $\alpha\beta$ coordinate system by means of an expanded induced voltage observer. This method is described in detail in NPL 1, PTL 7 or the like and, therefore, will be herein described briefly.

A motor voltage equation on the $\alpha\beta$ coordinate system is represented by the following expression (37) with the use of a derivative operator p (time-derivative operator).

$$\begin{pmatrix} v_\alpha \\ v_\beta \end{pmatrix} = \begin{pmatrix} R + pL_\alpha & pL_{\alpha\beta} \\ pL_{\beta\alpha} & R + pL_\beta \end{pmatrix} \begin{pmatrix} i_\alpha \\ i_\beta \end{pmatrix} + \omega K_e \begin{pmatrix} -\sin(\theta) \\ \cos(\theta) \end{pmatrix} \quad \cdots (37)$$

$V_{\alpha,\beta}$: Phase voltages
$i_{\alpha,\beta}$: Phase currents
$L_{\alpha,\beta,\alpha\beta}$: Inductances
$K_e$: Induced voltage constant
$\theta$: Rotor angle
$\omega$: Rotor speed

The inductances L$\alpha$, L$\beta$, L$\alpha\beta$ on the $\alpha\beta$ coordinate system are represented by the following expression (39) with the use of the inductances Ld, Lq on the dq coordinate system. Further, the expression (37) is rearranged by additionally using the currents id, iq (= Id, Iq) on the dq coordinate system as represented by the following expression (38). It is herein assumed that the inductances on the dq coordinate system do not have angle dependence, and the time-derivatives of the inductances Ld, Lq are zero. In the expression (38), the second term is wholly dependent on the motor position $\theta$, and is defined as an expanded induced voltage vector e (expression (40)). In the expressions, a symbol "·" is a derivative operator indicating first-order time-derivative and effective only on the relevant variable (only on iq in the expression (38)). The same definition also applies to the following description.

$$\begin{pmatrix} v_\alpha \\ v_\beta \end{pmatrix} = \begin{pmatrix} R + pL_d & \omega(L_d - L_q) \\ -\omega(L_d - L_q) & R + pL_d \end{pmatrix} \begin{pmatrix} i_\alpha \\ i_\beta \end{pmatrix} + \{(L_d - L_q)(\omega i_d - \dot{i}_q) + \omega K_e\} \begin{pmatrix} -\sin(\theta) \\ \cos(\theta) \end{pmatrix} \quad \cdots (38)$$

$$\left[\begin{array}{ll} L_\alpha = L_0 + L_1\cos2\theta & L_0 = \dfrac{L_d + L_q}{2} \\ L_\beta = L_0 - L_1\cos2\theta & \\ L_{\alpha\beta} = L_{\beta\alpha} = L_1\sin2\theta & L_1 = \dfrac{L_d - L_q}{2} \end{array}\right. \quad \cdots (39)$$

$$\mathbf{e} = \begin{pmatrix} e_\alpha \\ e_\beta \end{pmatrix} = \{(L_d - L_q)(\omega i_d - \dot{i}_q) + \omega K_e\}\begin{pmatrix} -\sin(\theta) \\ \cos(\theta) \end{pmatrix} \quad \cdots (40)$$

The expression (38) is rearranged to derive a state equation, whereby the following expressions (41) and (42) are provided. For the derivation of the expression (42) (which is the time-derivative of the expanded induced voltage), the first-order time-derivative of the d-axis current id, the second-order time-derivative of the q-axis current iq and the first-order time-derivative of the angular speed ω are each approximated to zero.

$$\left[\begin{array}{l} p\begin{pmatrix} i_\alpha \\ i_\beta \end{pmatrix} = \dfrac{1}{L_d}\left[\{-R + \omega(L_d - L_q)J\}\begin{pmatrix} i_\alpha \\ i_\beta \end{pmatrix} - \begin{pmatrix} e_\alpha \\ e_\beta \end{pmatrix} + \begin{pmatrix} v_\alpha \\ v_\beta \end{pmatrix}\right] \quad \cdots (41) \\ \\ p\begin{pmatrix} e_\alpha \\ e_\beta \end{pmatrix} \cong \omega J \begin{pmatrix} e_\alpha \\ e_\beta \end{pmatrix} \quad \cdots (42) \end{array}\right.$$

wherein $J = \begin{pmatrix} 0 & -1 \\ 1 & 0 \end{pmatrix}$

A least-order observer (expanded induced voltage observer) that determines an estimated expanded induced voltage ê (wherein the symbol "^" indicates an estimated value, and the same definition also applies to the following description) is represented by the following expressions (43) and (44). An observer gain G may be determined, for example, so as to be proportional to the absolute value of the speed.

$$\left[\begin{array}{l} \dot{i} = \dfrac{1}{L_d}\left[\{-R + \omega(L_d - L_q)J\}i - \hat{e} + v\right] \quad \cdots (43) \\ \\ \dot{\hat{e}} = \omega J\hat{e} + G(\dot{i} - \dot{i}) \quad \cdots (44) \end{array}\right.$$

wherein $G = \begin{pmatrix} g_1 & -g_2 \\ g_2 & g_1 \end{pmatrix}, g_1 < 0$

$\dot{\hat{i}}$: Estimated current derivative
$\dot{i}$: Detected current derivative
$\hat{e}$: Estimated expanded induced voltage value
$\dot{\hat{e}}$: Estimated expanded induced voltage derivative
G: Observer gain
$i$: Detected current value

The expression (44) is put in the expression (43), and the resulting expression is rearranged in consideration of GJ = JG. Then, the following expression (45) is provided.

$$\dot{\hat{e}} = \dfrac{1}{L_d}\left[\{-R + \omega(L_d - L_q)J\}Gi + (-G + \omega L_d J)\hat{e} + Gv\right] - G\dot{i} \quad \cdots (45)$$

To eliminate the detected current derivative, the expression (45) is converted into the following expression (46) with a parameter ξ = ê + Gi incorporated therein. Then, the first-order time-derivative of ξ can be determined based on a detected current value i and a detected voltage value v.

$$\dot{\xi} = \dot{\hat{e}} + G\dot{i} = \dfrac{1}{L_d}\{(-G + \omega L_d J)\xi + (-R - \omega L_q + G)Gi + Gv\} \quad \cdots (46)$$

Then, ξ is provided by time-integration of the expression (46), and reconverted into the following expression (47). Thus, the estimated expanded induced voltage $\hat{e}$ can be provided.

The estimated position is determined by taking the argument of the expanded induced voltage as represented by the following expression (48):

$$\hat{e} = \xi - Gi = \int \dot{\xi}\, dt - Gi \qquad \cdots (47)$$

$$\theta = \arg\left(e_{\alpha} + i \cdot e_{\beta}\right) \qquad \cdots (48)$$

In the expression (48), i is an imaginary unit.

The second position estimator 152 (see FIGS. 2A and 2B) uses the current detection values Iα, Iβ on the αβ fixed coordinate system acquired from the three-phase/two-phase transformer 134 (see FIG. 1B) as the current i in the expression (46), and uses the voltage commands Vαcmd, Vβcmd on the αβ fixed coordinate system acquired from the inverse dq transformer 132 (see FIG. 1B) as the detected voltage value v in the expression (46). Thereby, the second position estimator 152 determines the estimated induced voltage value $\hat{e}$ ($\widehat{e_{\alpha}}$, $\widehat{e_{\beta}}$) from the expression (47), and further determines the estimated rotor position $\theta_2$ from the expression (48).

Next, the cycle conversion of the estimated position signal generated by the first position estimator 151 (see FIGS. 2A and 2B), i.e., the function of the cycle convertor 154, will be described.

The first position estimator 151 estimates the position based on the fluctuation in the inductances according to the rotation of the rotor, i.e., by utilizing the dependence of the inductances on the rotational position of the rotor. Therefore, the estimated position signal generated by the first position estimator 151 has two fluctuation cycles in the rotor rotation per each electrical angle cycle of the stator. Therefore, as described above, the cycle convertor 154 (see FIGS. 2A and 2B) converts the estimated position signal generated by the first position estimator 151 into the first estimated position signal that has one fluctuation cycle in the rotor rotation per each electrical angle cycle of the stator.

Where the rotor rotation speed is in the lower speed range, the first position estimator 151 adapted to compute the position information contained in the motor inductance by the detection of the current ripples provides the signal that has two fluctuation cycles per each electrical angle cycle as indicated by the expressions (11), (14) and the like. Where the rotor rotation speed is in the middle to higher speed range, the second position estimator 152 adapted to compute the estimated position according to the expressions (47) and (48) by the expanded induced voltage observer provides the signal that has one fluctuation cycle per each electrical angle cycle.

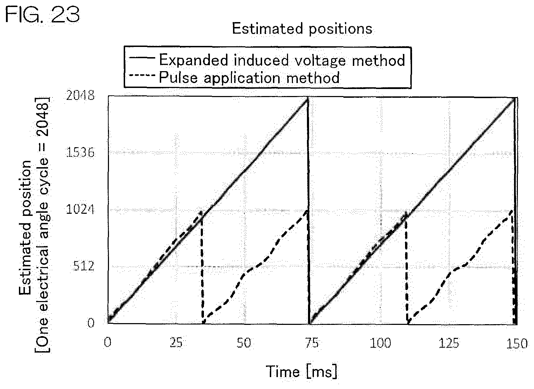

Specifically, a position estimation operation was performed by rotating a surface magnet synchronous motor having a rated rotation speed of 3,000 (r/min) at 160 (r/min) under no-load conditions, estimating the position with the use of the two estimation methods, and plotting the resulting data for two electrical angle cycles. The results of the position estimation operation are shown in FIG. 23. The position estimation based on the pulse application (the first estimation method by the first position estimator 151) provides an estimated position signal that has two cycles in the rotor rotation corresponding to one electrical angle cycle, while the position estimation based on the expanded induced voltage (the second estimation method by the second position estimator 152) provides an estimated position signal that has one cycle in the rotor rotation corresponding to one electrical angle cycle.

In the position estimation based on the pulse application (first estimation method), the estimated position signal is a two-cycle signal that has two cycles per each electrical angle cycle and, therefore, is required to be converted to a one-cycle signal. The cycle conversion is performed by the cycle convertor 154 (see FIGS. 2A and 2B) .

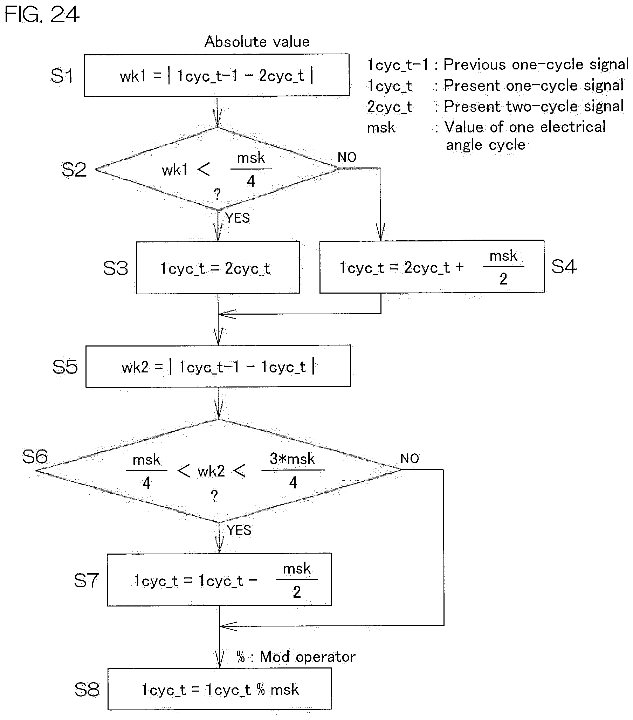

FIG. 24 shows an exemplary process to be performed by the cycle convertor 154 for the cycle conversion. This process is repeatedly performed in a predetermined computation cycle. In the following description, "one-cycle signal" is a signal that monotonically increases from a lower limit (specifically, zero) to an upper limit msk (a value corresponding to one electrical angle cycle, e.g., 2048) according to the rotor position in the one electrical angle cycle and repeats this monotonic increase. Further, "two-cycle signal" is a signal that monotonically increases from the lower limit to an upper limit msk/2 (a value half the value corresponding to the one electrical angle cycle) according to the rotor position in a cycle half the one electrical angle cycle and repeats this monotonic increase. That is, the one-cycle signal has one cycle per each electrical angle cycle, while the two-cycle signal has two cycles per each electrical angle cycle. As shown in FIG. 23, the second estimation method utilizing the expanded induced voltage generates the one-cycle signal, while the first estimation method utilizing the pulse application generates the two-cycle signal. As can be understood from FIG. 23, the two-cycle signal has a part consistent with the one-cycle signal and a part offset from the one-cycle signal by half the one electrical angle cycle.

According to the process described in FIG. 24, once a correct one-cycle signal is acquired at a given time, a one-cycle signal can be continuously generated based only on a two-cycle signal presently acquired in each computation cycle (a two-cycle signal in the present computation cycle).

Specifically, the absolute value wk1 of a difference between a previous one-cycle signal value 1cyc_t-1 (acquired in the previous computation cycle) and a present two-cycle signal value 2cyc_t (acquired in the present computation cycle) is determined (Step S1). Then, it is determined whether or not the absolute value wk1 of the difference is less than one fourth the value msk of the one electrical angle cycle (e.g., 2048) (Step S2, first determination). If wk1 < msk/4 (YES in Step S2), it is determined that the cycles of the signals are consistent with each other, and the two-cycle signal value 2cyc_t is temporarily used as it is as the present one-cycle signal value 1cyc_t (Step S3). If wk1 ≥ msk/4 (NO in Step S2), it is determined that the two-cycle signal value 2cyc_t is offset by half the cycle, and a value 2cyc_t+msk/2 obtained by adding one half the value msk of the one electrical angle cycle to the two-cycle signal value 2cyc_t is temporarily used as the one-cycle signal value 1cyc_t (Step S4).

Where the previous one-cycle signal value 1cyc_t-1 and the present two-cycle signal value 2cyc_t are both close to zero (cycle boundary), it is often impossible, due to a measurement noise, to correctly perform the process based on the first determination alone. For example, it is assumed that, where the value msk of the one electrical angle cycle is msk = 2048, ideal signal values for a rotor position at 0 are 1cyc_t-1 = 2cyc_t = 0, but signal values of 1cyc_t-1 = 2038 and 2cyc_t = 10 are acquired due to the noise. In this case, the present one-cycle signal value 1cyc_t is desirably 1cyc_t = 10. Where the process is performed based on the first determination, however, the absolute value wk1 of the difference is wk1 = 2028 (= 2038 - 10), and does not satisfy the condition wk1 < 512 (= msk/4) (NO in Step S2). Therefore, the one-cycle signal value 1cyc_t is 1cyc_t = 10 + 1024 = 1034 (Step S4). Thus, a value offset by half the cycle is outputted.

To prevent this, the absolute value wk2 of a difference between the one-cycle signal value 1cyc_t acquired in Step S3 or S4 based on the first determination (Step S2) and the one-cycle signal 1cyc_t-1 acquired in the previous computation cycle is determined (Step S5), and is further subjected to a second determination (Step S6). That is, if a condition msk/4 < wk2 < 3*msk/4 is satisfied (YES in Step S6), it is determined that the one-cycle signal value 1cyc_t acquired in Step S3 or S4 based on the first determination (Step S2) is offset by half the cycle. Then, the one-cycle signal value 1cyc_t is corrected as 1cyc_t = 1cyc_t - msk/2, and the corrected value is outputted (Step S7). If the determination in Step S6 is negative, the one-cycle signal value 1cyc_t acquired in Step S3 or S4 based on the first determination (Step S2) is correct and, therefore, is not subjected to the correction in Step S7.

In the above example, the one-cycle signal value 1cyc_t is determined to be 1cyc_t = 1034 by the process sequence based on the first determination alone (Steps S2, S3 and S4). Where the process sequence based on the second determination (Steps S6 and S7) is additionally performed, on the other hand, the absolute value wk2 is wk2 = 12038 - 10341 = 1004, which is not less than 512 (= msk/4) and not greater than 1536 (= 3*msk/4). Therefore, the one-cycle signal value 1cyc_t is corrected to 1cyc_t = 1034 -1024 = 10 (correct position). Even if the measurement value contains the noise, the correct one-cycle signal value is provided.

The one-cycle signal value 1cyc_t thus provided is further subjected to a modulus operation (Mod operation with a Mod operator %) based on the value msk of the one electrical angle cycle (Step S8), and a one-cycle signal value 1cyc_t of 0 to msk (= 2048) is outputted. The value msk of the one electrical angle cycle may be represented by a power of 2 (i.e., $2^n$ (wherein n is a natural number)), and a bit operation based on logical product (AND) may be employed instead of the Mod operation.

The initial position estimation method utilizing the saturation of iron cores (see NPL 2), for example, can be employed to provide the correct one-cycle signal at the given time.

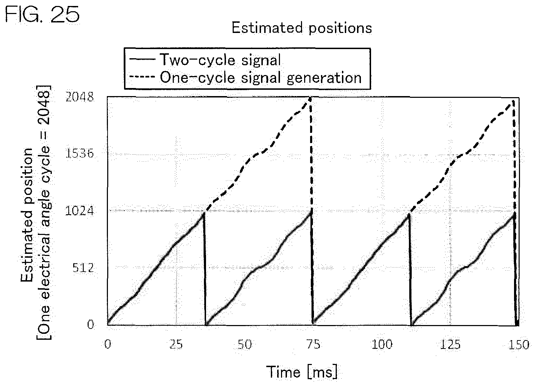

FIG. 25 shows the results of conversion in which, when the motor is driven under the same conditions as in FIG. 23, the two-cycle signal acquired by the first estimation method adapted to determine the estimated position based on the current ripples is converted into the one-cycle signal according to the process of FIG. 24. The value msk of the one electrical angle cycle is set to 2048. The results indicate that the one-cycle signal is properly generated.

Thus, the two types of estimated position signals each having one cycle in the rotor rotation per each electrical angle cycle on the αβ fixed coordinate system are provided by the first estimation method and the second estimation method. Depending on the estimated speed or the vector length of the expanded induced voltage, the estimated position signal to be used is switched between the two types of estimated position signals, or the two types of estimated position signals are weighted and combined together. Thereby, a probable estimated position can be determined for the entire speed range. Thus, the sensorless control can be achieved for the entire speed range.

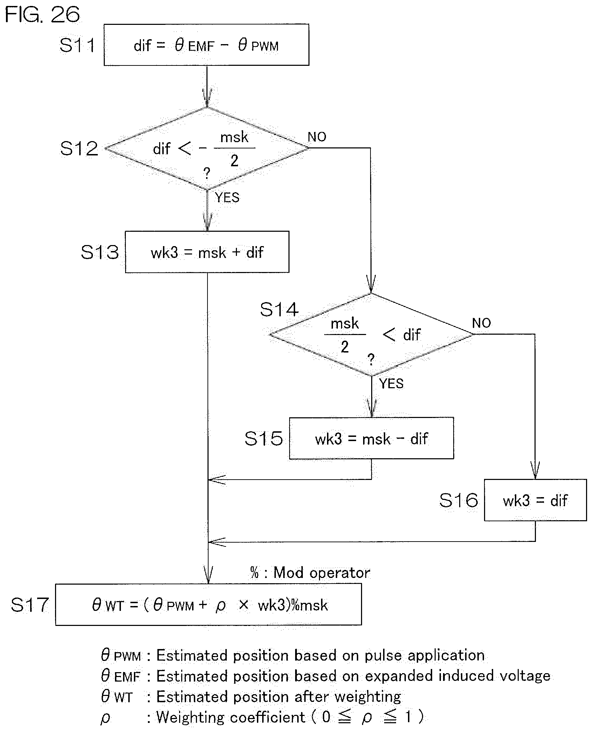

FIG. 26 shows an exemplary process to be performed by the estimated position combiner 153 (see FIGS. 2A and 2B). In the configuration shown in FIG. 2A, the estimated position combiner 153 weights and combines the first and second estimated position signals $\theta_{1C}$ and $\theta_{2C}$ respectively corrected by the first and second compensators 161 and 162. In the configuration shown in FIG. 2B, the estimated position combiner 153 weights and combines the uncorrected first and second estimated position signals $\theta_1$, $\theta_2$. Here, the rotor estimated positions indicated by the first estimated position signals $\theta_{1C}$, $\theta_1$ provided by the first estimation method utilizing the pulse application are collectively defined as

"first estimated position $\theta_{PWM}$." Similarly, the rotor estimated positions indicated by the second estimated position signals $\theta_{2C}$, $\theta_2$ provided by the second estimation method utilizing the expanded induced voltage are collectively defined as "second estimated position $\theta_{EMF}$."

The weighting of the estimated positions is achieved by sawtooth waveform weighting computation. Specifically, a difference dif of the second estimated position $\theta_{EMF}$ from the first estimated position $\theta_{PWM}$ is determined (Step S11). It is checked if the difference dif falls outside a range defined by one half the value msk of the one electrical angle cycle (e.g., 2048). That is, it is checked if dif < -msk/2 (Step S12) and if dif > msk/2 (Step S14). If dif < -msk/2 (YES in Step S12), a value msk+dif obtained by adding the difference dif to the value msk of the one electrical angle cycle is substituted for a variable wk3 (Step S13). If dif > msk/2 (YES in Step S14), a value msk-dif obtained by subtracting the difference dif from the value msk of the one electrical angle cycle is substituted for the variable wk3 (Step S15). If the difference dif falls within the range defined by one half the value msk of the one electrical angle cycle (-msk/2 ≤ dif ≤ msk/2) (NO in both of Steps S12 and S14), the difference dif is substituted for the variable wk3 (Step S16). Then, a value $\rho \cdot$wk3 obtained by weighting the variable wk3 with a weighting coefficient $\rho$ ($0 \le \rho \le 1$) is added to the first estimated position $\theta_{PWM}$, and the resulting sum is subjected to a modulus operation Mod (with a Mod operator %) based on the value msk of the one electrical angle cycle according to the following expression (49), whereby the composite estimated position $\theta_{WT}$ is determined by the weighting combination (Step S17).

$$\theta_{WT} = (\theta_{PWM} + \rho \times wk3) \% msk \quad \cdots (49)$$

As shown, if wk3 = dif (Step S16), $\theta_{PWM} + \rho \times wk3 = \theta_{PWM} + \rho(\theta_{EMF} - \theta_{PWM}) = (1 - \rho)\theta_{PWM} + \rho\theta_{EMF}$ and, thus, the first estimated position $\theta_{PWM}$ and the second estimated position $\theta_{EMF}$ are weighted and combined together. In the modulus operation (with the Mod operator o), an estimated position signal that periodically changes in the sawtooth waveform within a range of 0 to msk is computed based on the weighting combination result.

For example, it is herein assumed that, when the value of the true rotor position is 5, a first estimated position $\theta_{PWM}$ = 2038 and a second estimated position $\theta_{EMF}$ = 20 are obtained. Where the weighting coefficient $\rho$ is $\rho$ = 0.5, a reasonable computation result is such that a composite estimated position $\theta_{WT}$ is $\theta_{WT}$ = 5 after the weighting. To provide this result, the difference dif between the two estimated positions $\theta_{PWM}$ and $\theta_{EMF}$ is determined (Step S11). Then, if the difference dif is within ±msk/2, the difference dif is used as the variable wk3 (which indicates a distance between the two estimated positions). If the difference dif is greater than msk/2, a value obtained by subtracting the difference dif from the value msk of the one electrical angle cycle is used as the variable wk3. If the difference dif is smaller than -msk/2, a value obtained by adding the difference dif to the value msk of the one electrical angle cycle is used as the variable wk3 (Steps S12 to S16). After the variable wk3 is multiplied by the weighting coefficient $\rho$, the resulting product is added to one of the estimated positions $\theta_{PWM}$ and $\theta_{EMF}$ (in the example shown in FIG. 26, the first estimated position $\theta_{PWM}$).

In the above example, the difference dif is dif = -2018 (= 20 - 2038) and, therefore, the variable wk3 is wk3 = 2048 - 2018 = 30. Accordingly, the composite estimated position $\theta_{WT}$ is $\theta_{WT}$ = (2038 + 0.5 × 30)%2048 = 5. This indicates that a reasonable weighting result can be provided.

While a branch process is employed in the process shown in FIG. 26, a high-speed processing method with a Mod operation or a bit shift operation is represented by the following expression (50). The computation result is equivalent to that provided by the process of FIG. 26.

A variable wk in the expression (50) provides a computation result equivalent to that provided by the variable wk3 in FIG. 26, and the weighting result is such that $\theta_{WT} = \theta_{PWM}$ with $\rho$ = 0 and $\theta_{WT} = \theta_{EMF}$ with $\rho$ = 1.

$$\left[ \begin{array}{l} wk = 2 \times \left\{ (\theta_{EMF} - \theta_{PWM})\% \left(\frac{msk}{2}\right) \right\} - \{(\theta_{EMF} - \theta_{PWM})\% msk\} \\ \theta_{WT} = (\theta_{PWM} + \rho \times wk)\% msk \qquad \cdots (50) \end{array} \right.$$

wherein % is Mod operator.

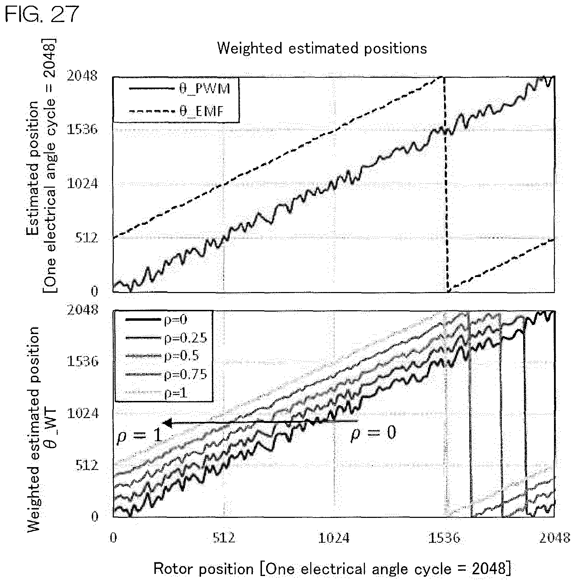

For example, it is assumed that $\theta_{PWM}$ and $\theta_{EMF}$ each have a certain noise and $\theta_{EMF}$ is offset from $\theta_{PWM}$ by +512. A composite estimated position $\theta_{WT}$ to be obtained when $\rho$ is changed in a range of $0 \le \rho \le 1$ is computed from the expression (50). The results of the computation are shown in FIG. 27. When $\rho$ = 0, $\theta_{WT}$ matches with $\theta_{PWM}$. When $\rho$ = 1, $\theta_{WT}$ matches with $\theta_{EMF}$. Further, as shown, when $\rho$ has a value between 0 and 1, $\theta_{WT}$ can be weighted according to the change in $\rho$ even if the noise is contained. In this example, $\theta_{EMF}$ is offset from $\theta_{PWM}$ for easy visual understanding but, in reality, $\theta_{EMF}$ and $\theta_{PWM}$ have substantially the same value. Even in this case, the weighting combination can be properly achieved with the use of the expression (50).

By changing the weighting coefficient $\rho$ according to the estimated speed or the vector length of the expanded induced voltage vector e (see the expression (40)), the first estimation method and the second estimation method can be properly weighted according to the rotor rotation speed, allowing for smooth transition of the estimation method. One example is shown by the following expression (51), wherein $\omega$ is the estimated speed, $\omega_s$ is a weighting start speed, and $\omega_e$ is a weighting end speed. In the expression (51), the weighting coefficient $\rho$ is changed proportionally (linearly) to the estimated speed $\omega$. When the rotor speed is in a lower speed range less than the weighting start speed $\omega_s$, $\rho = 0$, and only the estimation result provided by the first estimation method is used. Similarly, when the rotor speed is in a higher speed range greater than the weighting end speed $\omega_e$, $\rho = 1$, and only the estimation result provided by the second estimation method is used.

$$\rho = \frac{\omega - \omega_s}{\omega_e - \omega_s} \quad (0 \leq \rho \leq 1) \qquad \cdots (5 1)$$

The vector length |e| of the expanded induced voltage may be used instead of the estimated speed $\omega$, or the weighting coefficient $\rho$ may be defined by some other function (nonlinear function) which is not proportional (linear).

Where $\omega_s \approx \omega_e$ in the expression (51), the weighting coefficient $\rho$ is switched from 0 to 1 at the speed $\omega_s$. This substantially means that the estimation method is switched instead of being weighted when the rotor speed is the specific speed, i.e., substantially corresponds to switching combination.

The weighting combination to be achieved by the configuration shown in FIG. 2A is represented by the first line of the following expression (52). In the expression (52), $\Delta\theta_1$ is a correction amount provided by the first compensator 161, and $\theta_{1C} = \theta_1 + \Delta\theta_1$. Similarly, $\Delta\theta_2$ is a correction amount provided by the second compensator 162, and $\theta_{2C} = \theta_2 + \Delta\theta_2$. In the expression (52), the first line can be rearranged into the third line. This represents the weighting combination to be achieved by the configuration shown in FIG. 2B. In the expression (52), the first term of the third line indicates the weighting combination before the compensation, and the second term of the third line indicates the compensation after the weighting combination. Therefore, the configurations shown in FIGS. 2A and 2B can perform substantially equivalent processes.

$$
\begin{aligned}
\theta_{new} &= (1 - \rho)\,\theta_{1C} + \rho\,\theta_{2C} \\
&= (1 - \rho)\,(\theta_1 + \Delta\theta_1) + \rho\,(\theta_2 + \Delta\theta_2) \\
&= (1 - \rho)\,\theta_1 + \rho\,\theta_2 + \{(1 - \rho)\,\Delta\theta_1 + \rho\,\Delta\theta_2\} \quad \ldots (52)
\end{aligned}
$$

The compensation (correction) to be performed by the first compensator 161 may be the processes described with reference to FIGS. 15A and 15B and FIGS. 16A and 16B (see the expressions (34) and (35)).

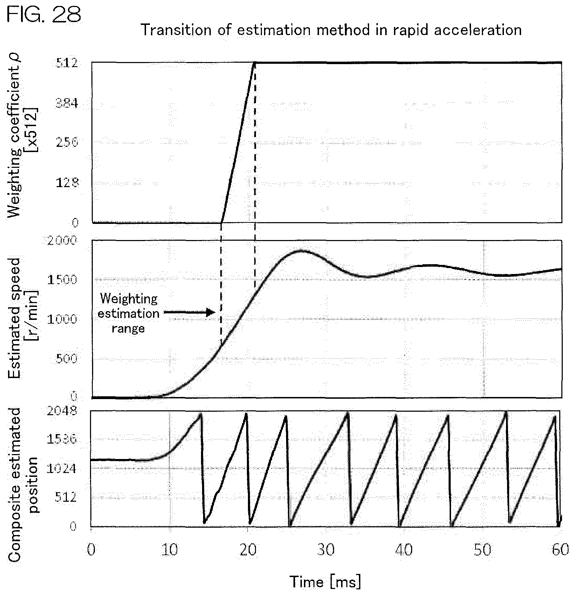

By way of example, the controller 1 (see FIG. 1A) was designed (programmed) so as to compute the weighted composite estimated position $\theta_{new}$ with the weighting start speed $\omega_s$ set to $\omega_s = 600$ (r/min) and the weighting end speed $\omega_e$ set to $\omega_e = 1200$ (r/min) in the expression (51). However, the compensators 161, 162, 163 (see FIGS. 2A and 2B) were omitted. The speed control of the AC motor M was performed by the controller 1 to rapidly accelerate the AC motor M from 0 to 1600 (r/min) in 30 (ms (milliseconds)). Changes in the weighting coefficient $\rho$, the estimated speed $\omega$ and the composite estimated position $\theta_{new}$ observed with time in this case are plotted as shown in FIG. 28.

As shown, the weighting coefficient $\rho$ changes linearly according to the speed from 600 to 1200 (r/min), and the weighted composite estimated position $\theta_{new}$ smoothly changes without significant fluctuation even in the rapid acceleration.

A synchronous motor control method which ensures a rapid and continuous acceleration/deceleration performance in transition between the lower speed range and the higher speed range without the need for a magnetic pole position detector is disclosed, for example, in PTL 8. PTL 8 shows the result of an experiment in which the forward/reverse rotation of a synchronous motor at a speed of $\pm 1300$ (r/min) was achieved at an acceleration rate of 1.5 (s). The acceleration rate in the above example is about 30 times that in PTL 8.

It is also possible to narrow the weighting speed range of $\omega_s$ to $\omega_e$. In this case, however, the chattering is liable to occur during rotation at a speed in the estimation method switching speed range of $\omega_s$ to $\omega_e$ to result in unstable control, unless the estimated position error is sufficiently small when the rotor speed is in the lower speed range and in the middle to higher speed range. The weighting start speed $\omega_s$ and the weighting end speed $\omega_e$ may be defined based on the upper limit of the speed at which the first estimation method utilizing the pulse application can be employed and the lower limit of the speed at which the second estimation method utilizing the expanded induced voltage estimation can be employed with a sufficiently high accuracy.

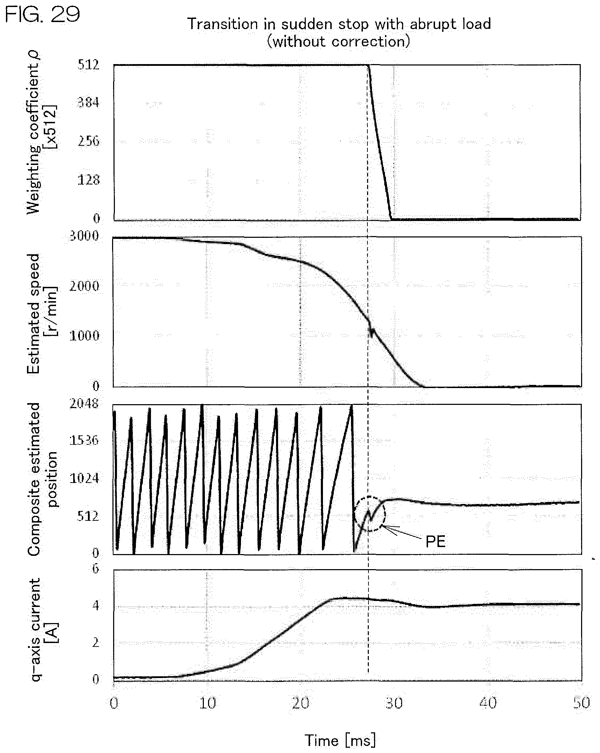

In another experiment, the AC motor M was abruptly stopped in a deceleration period of about 30 (ms) by applying an abrupt load while controlling the speed of the AC motor M at a command speed of 3000 (r/min) by means of the controller 1 designed in the same manner as in the above example. Changes in the weighting coefficient $\rho$, the estimated speed $\omega$, the weighted composite estimated position $\theta_{new}$ and the q-axis current iq observed with time in this case are shown in FIG. 29.

During the transition from the middle to higher speed range to the lower speed range, i.e., during the transition period from the second estimation method to the first estimation method, the composite estimated position has a significant error of an electrical angle of about 30 degrees as indicated by a reference character PE. This occurs when the estimation results provided by the first and second estimation methods are significantly deviated from each other. If the composite estimated position error is further increased, the step out of the motor is liable to occur. This is influenced by the deviation in the estimated position (see FIGS. 14A and 14B) due to the change in the inductance phase of the motor by the application of the q-axis current iq in the first estimation method utilizing the pulse application, or influenced by a delay attributable to a filter or the like used for the second estimation method utilizing the expanded induced voltage (a delay of the estimated value with respect to the speed).

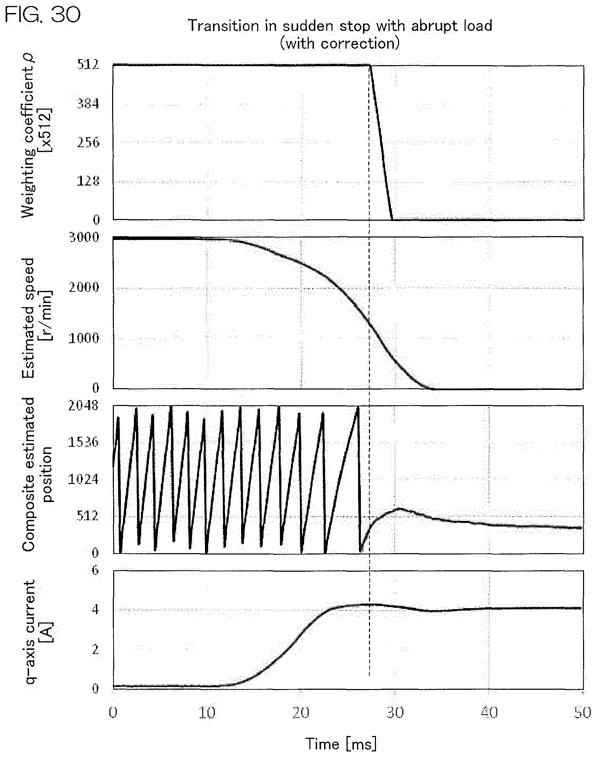

This problem can be solved by the functions of the first and second compensators 161, 162 (see FIG. 2A). That is, the first and second estimated position signals $\theta_1$, $\theta_2$ provided by the first and second estimation methods are compensated according to the dq-axis currents id, iq and the estimated speed $\omega$, and the compensated first and second estimated position signals $\theta_{1C}$, $\theta_{2C}$ are weighted and combined together. An experiment was performed under the same drive conditions as the experiment shown in FIG. 29 by compensating the first and second estimated position signals $\theta_1$, $\theta_2$ proportionally to a first-order combination a·iq + b·$\omega$ (wherein a and b are constants) of the q-axis current iq and the estimated speed $\omega$. The results of the experiment are shown in FIG. 30. Even during the period of the transition between the first and second estimation methods due to sudden stop with an abrupt load, a smooth change in the composite estimated position was observed with no substantial error in the composite estimated position.

In this exemplary experiment, the sudden stop attributable to the abrupt load was reproduced. Where the transition between the position estimation methods occurs when a great q-axis current iq flows due to an external load, the aforementioned compensation can provide the same effects.

The level of the compensation may be preliminarily adjusted. For example, an ideal position (true position) may be detected by a position detection encoder or the like attached to the motor, and the level of the compensation may be defined so as to minimize a deviation of the estimated position from the ideal position for a given dq-axis current and a given speed. Once the level of the compensation is thus adjusted and the resulting data is formulated into a function or a table, the position detection encoder can be obviated.

The aforementioned compensation can be performed because the position estimators 151, 152 output the estimated positions on the motor fixed coordinate system. Where a position estimator adapted to output the position error $\Delta\theta$ on the motor rotational coordinate system is used, it is impossible to directly correct the estimated position. Therefore, it is necessary to adjust motor parameters for the computation of the position error $\Delta\theta$ so as to provide the true estimated position. However, this procedure is difficult.

As described above, the position estimation on the fixed coordinate system is performed by the two estimation methods, i.e., the estimation method based on the current ripples (first estimation method) and the estimation method based on the expanded induced voltage (second estimation method), and the estimation method is switched between the first estimation method and the second estimation method, whereby the sensorless control can be stably achieved with higher responsiveness. For the speed range (middle to higher speed range) for which the estimation based on the expanded induced voltage (second estimation method) is employed, the position estimation based on the current ripples (first estimation method) is basically unnecessary unless the rapid deceleration is involved.

The voltage vector patterns to be applied for the first estimation method are liable to pose a problem such that a time range usable for the application of the drive voltage for the driving of the motor (a period during which the drive voltage is applied in each PWM control cycle) is reduced, and a problem such that a high-frequency noise occurs due to the fluctuation of the current in a cycle equivalent to the product of the number of the voltage vector patterns and the PWM control cycle. For prevention of these problems, it is preferred to control the PWM generator 14 (see FIG. 1B) so as not to apply the position detection voltage vector patterns shown in FIGS. 6A and 6B for the speed range for which only the position estimation result based on the expanded induced voltage (second estimation method) is used (for the higher speed range greater than the weighting end speed $\omega_e$).

While the embodiment of the present invention has thus been described, the invention can be embodied in some other ways.

The configuration adapted to perform the position control by externally applying the command position is shown above in FIG. 1B by way of example. Alternatively, speed control may be performed by externally applying a command speed to the speed controller 12 without the provision of the position controller 11. Further, torque control may be performed by externally applying a command current to the dq current controller 131 without the provision of the speed controller 12.

Further, a voltage for compensation for a speed electromotive force may be applied to the output of the dq current controller 131 to perform a dq-axis noninterference control or to additionally perform a slight field control according to the speed.

In the aforementioned embodiment, the observer represented by the expressions (43) and (44) is used for the estimation of the expanded induced voltage. In a modification of the embodiment, the expanded induced voltage vector represented by the expression (40) may be used as it is. Further, the weighting position estimator 15 may be configured by employing some other position estimator that is capable of computing the estimated position on the motor fixed coordinate system without the estimation of the position error $\Delta\theta$.

Further, the weighting position estimator 15 may include three or more position estimators that respectively output estimated positions on the motor fixed coordinate system and may be configured so as to combine these estimated positions together. For example, the weighting position estimator 15 may use three position estimators, i.e., the position estimator utilizing the current ripples, the position estimator utilizing the expanded induced voltage, and a position estimator utilizing a magnetic flux observer, as the position estimators that respectively output the estimated positions on the fixed coordinate system, and may be configured to weight and combine the estimated positions together. Thus, the weighting position estimator 15 can be configured to be highly accurate.

In the configuration shown in FIG. 1B, the current ripples (current derivatives) are directly detected by the current derivative detectors 4uvw. Alternatively, the changes (variations) in the currents may be detected without the provision of the current derivative detectors 4uvw. For example, differences between currents detected before and after the application of position detection voltage vectors may be determined for use as values indicating the current ripples.

While the present invention has been described in detail by way of the embodiments thereof, it should be understood that these embodiments are merely illustrative of the technical principles of the present invention but not limitative of the invention. The spirit and scope of the present invention are to be limited only by the appended claims.

REFERENCE SIGNS LIST

1: Controller
2: Inverter
3u, 3v, 3w: Current detectors
4u, 4v, 4w: Current derivative detectors
5u, 5v, 5w: Windings
11: Position controller
12: Speed controller
13: Current controller
14: PWM generator
15: Weighting position estimator
16: Speed estimator
100: Motor control device
131: dq current controller
132: Inverse dq transformer
135: dq transformer
151: First position estimator
152: Second position estimator
153: Estimated position combiner
154: Cycle convertor
161: First compensator
162: Second compensator
163: Composite position compensator

**Claims**

1.  A motor control device that controls an AC synchronous motor through sensorless control without using a rotor position sensor, the motor control device comprising:

    a first position estimator that estimates a position of a rotor of the AC synchronous motor on a fixed coordinate system by a first estimation method;
    a second position estimator that estimates the position of the rotor of the AC synchronous motor on a fixed coordinate system by a second estimation method different from the first estimation method; and
    drive control means that drives the AC synchronous motor based on estimation results of the first position estimator and the second position estimator.

2. The motor control device according to claim 1, wherein the first estimation method and the second estimation method are each adapted to estimate the rotor position without estimating an error in the rotor position.

3. The motor control device according to claim 1, wherein the first estimation method and the second estimation method are each adapted to estimate the rotor position without using PLL (phase lock loop) control adapted to output an estimated rotor speed so as to nullify an error in the rotor position.

4. The motor control device according to any one of claims 1 to 3,

    wherein the first position estimator outputs an estimated position signal that has two fluctuation cycles in rotor rotation per each electrical angle cycle of a stator of the motor,
    wherein the second position estimator outputs an estimated position signal that has one fluctuation cycle in the rotor rotation per each electrical angle cycle of the stator.

5. The motor control device according to any one of claims 1 to 3,

    wherein the first position estimator outputs an estimated position signal that has two fluctuation cycles in rotor rotation per each electrical angle cycle of a stator of the motor,
    wherein the second position estimator outputs an estimated position signal that has one fluctuation cycle in the rotor rotation per each electrical angle cycle of the stator,
    the motor control device further comprising a cycle convertor that converts the estimated position signal of the first position estimator to an estimated position signal which is a cyclic signal that has one fluctuation cycle in the rotor rotation per each electrical angle cycle of the stator.

6. The motor control device according to any one of claims 1 to 5, wherein the first position estimator estimates the rotor position by detecting a change in an inductance of the AC synchronous motor based on current ripples occurring in a winding current of the AC synchronous motor when a position detection voltage vector is applied to the AC synchronous motor.

7. The motor control device according to any one of claims 1 to 6, wherein the second position estimator estimates the rotor position based on an estimated value of an expanded induced voltage.

8. The motor control device according to claim 7, further comprising:

    an estimated position combiner that generates a composite estimated position by switching between a first estimated position signal and a second estimated position signal or by weighting and combining the first estimated position signal and the second estimated position signal, depending on a rotation speed of the rotor or a vector length of the expanded induced voltage, the first estimated position signal being the estimated position signal outputted by the first position estimator, the second estimated position signal being the estimated position signal outputted by the second position estimator,
    wherein the drive control means drives the AC synchronous motor based on the composite estimated position generated by the estimated position combiner.

9. The motor control device according to claim 8, further comprising:

    a first compensator and a second compensator that respectively compensate the first estimated position signal and the second estimated position signal according to the motor current and the rotor rotation speed; or
    a composite estimated position compensator that compensates the composite estimated position according to the motor current and the rotor rotation speed.

10. The motor control device according to claim 8 or 9,

    wherein the first position estimator estimates the rotor position by detecting the change in the inductance of the AC synchronous motor based on the current ripples occurring in the winding current of the AC synchronous motor when a position detection voltage vector is applied to the AC synchronous motor,
    wherein the estimated position combiner generates the composite estimated position without using the first estimated position signal when the rotor rotation speed is in a higher speed range not less than a predetermined speed level,

wherein the application of the position detection voltage vector is stopped when the rotor rotation speed is in the higher speed range.

11. A drive system comprising:

an AC synchronous motor;
an inverter that supplies an alternating current to the AC synchronous motor; and
a motor control device that controls the inverter;
wherein the motor control device is the motor control device according to any one of claims 1 to 10.

FIG. 1A

EP 4 280 452 A1

FIG. 1B

EP 4 280 452 A1

FIG. 2A

FIG. 2B

EP 4 280 452 A1

FIG. 3

EP 4 280 452 A1

FIG. 4A

| Voltage vector | PWM pattern (u, v, w) |
|---|---|
| V0 | (0, 0, 0) |
| V1 | (1, 0, 0) |
| V2 | (1, 1, 0) |
| V3 | (0, 1, 0) |
| V4 | (0, 1, 1) |
| V5 | (0, 0, 1) |
| V6 | (1, 0, 1) |
| V7 | (1, 1, 1) |

FIG. 4B

FIG. 5

$\underline{M}$

FIG. 6A

★ : Current derivative acquisition timing    ● : Current value acquisition timing (drive voltage)

Position detection voltage vector V1(100)    V3(010)    V5(001)

(a)                    U-phase

(b) Line voltage       V-phase

(c)                    W-phase

Inverse voltage vector  V4(011)    V6(101)    V2(110)

(d)                    U-phase

(e) Line current       V-phase

(f)                    W-phase

(g)                    U-phase

(h) Line current       V-phase
    derivative

(i)                    W-phase

FIG. 6B

★ : Current derivative acquisition timing     ● : Current value acquisition timing (drive voltage)

Position detection voltage vector   V1(100)        V3(010)        V5(001)

(a)           U-phase

(b)  Line voltage  V-phase

(c)           W-phase

(d)           U-phase

(e)  Line current  V-phase

(f)           W-phase

(g)           U-phase

(h)  Line current derivative  V-phase

(i)           W-phase

EP 4 280 452 A1

FIG. 7

FIG. 8

Inductances on UVW coordinate system

Rotor electrical angle [rad]

FIG. 9A    Inductances on dq coordinate

FIG. 9B    Inductances on $\alpha\,\beta$ coordinate

FIG. 9C    Components m, n, s

FIG. 10A

Current derivatives for voltage vector (100)

FIG. 10B

Current derivatives for voltage vector (010)

FIG. 10C

Current derivatives for voltage vector (001)

FIG. 11A

Current derivatives for voltage vector (100)

FIG. 11B

Current derivatives for voltage vector (010)

FIG. 11C

Current derivatives for voltage vector (001)

FIG. 11D

Three-phase position estimation signals
(zero current)

FIG. 11E

Two-phase position estimation signals/
Estimated position (zero current)

FIG. 12A

Inductances (zero current)

Rotor electrical angle [deg]

FIG. 12B

Interlinkage magnetic fluxes of
respective phase coils
(zero current)

Rotor electrical angle [deg]

FIG. 13A

Inductances (positive q-axis current)

FIG. 13B  Interlinkage magnetic fluxes of respective phase coils
(positive q-axis current)

FIG. 13C

Inductances (negative q-axis current)

FIG. 13D  Interlinkage magnetic fluxes of respective phase coils
(negative q-axis current)

FIG. 14A  Three-phase position estimation signals
(positive q-axis current)

FIG. 14B  Three-phase position estimation signals
(negative q-axis current)

FIG. 14C  Estimated positions

FIG. 14D  Estimated angle errors

FIG. 15A

Estimated positions after translation correction

FIG. 15B

Estimated angle errors after translation correction

FIG. 16A

Estimated positions after harmonic correction

FIG. 16B

Estimated angle errors after harmonic correction

FIG. 17A

dq inductances (zero current)

FIG. 17B

α β inductances (zero current)

FIG. 17C

Components m, n, s (zero current)

FIG. 18A

Current derivatives for voltage vector (100)

FIG. 18B

Current derivatives for voltage vector (010)

FIG. 18C

Current derivatives for voltage vector (001)

**FIG. 18D**

Three-phase position estimation signals
(zero current)

**FIG. 18E**

Two-phase position estimation signals/
Estimated position (zero current)

## FIG. 19A

Current derivatives for voltage vector (100)

## FIG. 19B

Current derivatives for voltage vector (010)

## FIG. 19C

Current derivatives for voltage vector (001)

FIG. 20A

Three-phase position estimation signals
(inter-phase difference computation)

FIG. 20B

Two-phase position estimation signals/
Estimated position
(inter-phase difference computation)

FIG. 21A

Three-phase position estimation signals
(intra-phase difference computation)

—— Signal Us ----- Signal Vs — —Signal Ws

Signal amplitude [a.u.]

4000
3000
2000
1000
0
-1000
-2000
-3000
-4000

0    45    90    135    180    225    270    315    360

Rotor electrical angle [deg]

FIG. 21B

Two-phase position estimation signals/
Estimated position
(intra-phase difference computation)

— — Signal α s    ----- Signal β s
—— Estimated position

Signal amplitude [a.u.]

8000
6000
4000
2000
0
-2000
-4000
-6000
-8000

Estimated position [deg]

180
135
90
45
0
-45
-90
-135
-180

0    45    90    135    180    225    270    315    360

Rotor electrical angle [deg]

FIG. 22A

Three-phase position estimation signals
(inter-phase difference computation)

—— Signal Us ----- Signal Vs ——— Signal Ws

FIG. 22B

Two-phase position estimation signals/
Estimated position
(inter-phase difference computation)

—— Signal $\alpha$s  ----- Signal $\beta$s
—— Estimated position

FIG. 23

Estimated positions

—— Expanded induced voltage method
---- Pulse application method

FIG. 24

Absolute value

S1 $\quad$ wk1 = | 1cyc_t-1 − 2cyc_t |

1cyc_t-1 : Previous one-cycle signal
1cyc_t $\quad$ : Present one-cycle signal
2cyc_t $\quad$ : Present two-cycle signal
msk $\quad\quad$ : Value of one electrical
$\quad\quad\quad\quad$ angle cycle

S2 $\quad$ wk1 < $\dfrac{msk}{4}$ ? $\quad$ NO

YES

S3 $\quad$ 1cyc_t = 2cyc_t

S4 $\quad$ 1cyc_t = 2cyc_t + $\dfrac{msk}{2}$

S5 $\quad$ wk2 = | 1cyc_t-1 − 1cyc_t |

S6 $\quad$ $\dfrac{msk}{4}$ < wk2 < $\dfrac{3*msk}{4}$ ? $\quad$ NO

YES

S7 $\quad$ 1cyc_t = 1cyc_t − $\dfrac{msk}{2}$

% : Mod operator

S8 $\quad$ 1cyc_t = 1cyc_t % msk

FIG. 25

Estimated positions

FIG. 26

S11 | $dif = \theta_{EMF} - \theta_{PWM}$

S12 $\quad dif < -\dfrac{msk}{2}$ ? ── NO

YES

S13 | $wk3 = msk + dif$

S14 $\quad \dfrac{msk}{2} < dif$ ? ── NO

YES

S15 | $wk3 = msk - dif$

S16 | $wk3 = dif$

% : Mod operator

S17 | $\theta_{WT} = (\theta_{PWM} + \rho \times wk3)\%msk$

$\theta_{PWM}$ : Estimated position based on pulse application
$\theta_{EMF}$ : Estimated position based on expanded induced voltage
$\theta_{WT}$ : Estimated position after weighting
$\rho$ : Weighting coefficient ($0 \leqq \rho \leqq 1$)

FIG. 27

Weighted estimated positions

FIG. 28

Transition of estimation method in rapid acceleration

Weighting coefficient ρ [×512]

Estimated speed [r/min]

Weighting estimation range

Composite estimated position

Time [ms]

FIG. 29

Transition in sudden stop with abrupt load
(without correction)

Time [ms]

## FIG. 30

**Transition in sudden stop with abrupt load (with correction)**

## INTERNATIONAL SEARCH REPORT

| International application No. |
| --- |
| **PCT/JP2022/000804** |

| A. | CLASSIFICATION OF SUBJECT MATTER |
| --- | --- |

*H02P 6/182*(2016.01)i; *H02P 6/185*(2016.01)i
FI:   H02P6/185; H02P6/182

According to International Patent Classification (IPC) or to both national classification and IPC

| B. | FIELDS SEARCHED |
| --- | --- |

Minimum documentation searched (classification system followed by classification symbols)

H02P6/185; H02P6/182; H02P21/18; H02P27/06

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | JP 2008-220100 A (JTEKT CORP.) 18 September 2008 (2008-09-18) paragraphs [0003]-[0006], [0017]-[0057], fig. 1-9 | 1-5 |
| Y | | 6-11 |
| Y | JP 2018-42336 A (TOSHIBA CORP.) 15 March 2018 (2018-03-15) paragraphs [0013]-[0032], fig. 1-5 | 6-11 |
| Y | JP 2016-100964 A (AISIN AW CO., LTD.) 30 May 2016 (2016-05-30) paragraphs [0037]-[0043] | 7-11 |
| A | JP 2010-74898 A (RENESAS TECHNOLOGY CORP.) 02 April 2010 (2010-04-02) paragraphs [0058]-[0077], fig. 6, 7 | 1-11 |

☐ Further documents are listed in the continuation of Box C.          ☑ See patent family annex.

| | |
| --- | --- |
| *   Special categories of cited documents: | "T"   later document published after the international filing date or priority date and not in conflict with the application but cited to understand the principle or theory underlying the invention |
| "A"   document defining the general state of the art which is not considered to be of particular relevance | |
| "E"   earlier application or patent but published on or after the international filing date | "X"   document of particular relevance; the claimed invention cannot be considered novel or cannot be considered to involve an inventive step when the document is taken alone |
| "L"   document which may throw doubts on priority claim(s) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O"   document referring to an oral disclosure, use, exhibition or other means | |
| "P"   document published prior to the international filing date but later than the priority date claimed | "&"   document member of the same patent family |

| Date of the actual completion of the international search | Date of mailing of the international search report |
| --- | --- |
| **16 March 2022** | **29 March 2022** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

**INTERNATIONAL SEARCH REPORT**
Information on patent family members

International application No.

**PCT/JP2022/000804**

| Patent document cited in search report | | | Publication date (day/month/year) | Patent family member(s) | | | Publication date (day/month/year) |
|---|---|---|---|---|---|---|---|
| JP | 2008-220100 | A | 18 September 2008 | (Family: none) | | | |
| JP | 2018-42336 | A | 15 March 2018 | KR 10-2018-0027348 | A | | |
| | | | | CN 107947667 | A | | |
| JP | 2016-100964 | A | 30 May 2016 | (Family: none) | | | |
| JP | 2010-74898 | A | 02 April 2010 | US 2010/0066284 | A1 | | |
| | | | | paragraphs [0083]-[0103], fig. 6, 7 | | | |
| | | | | CN 101677223 | A | | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2021005622 A
- JP 2008011616 A
- WO 2002091558 A1
- JP 2002058294 A
- WO 2010109528 A1
- WO 2014128887 A1
- JP 2006158046 A
- JP HEI81996256496 A
- JP HEI10199894298 A

### Non-patent literature cited in the description

- **Z. CHEN.** An Extended Electromotive Force Model for Sensorless Control of Interior Permanent-Magnet Synchronous Motors. *IEEE TRANSACTIONS ON INDUSTRIAL ELECTRONICS,* April 2003, vol. 50 (2), 288-295
- **T. AIHARA.** Sensorless Torque Control of Salient-Pole Synchronous Motor at Zero-Speed Operation. *IEEE TRANSACTIONS ON POWER ELECTRONICS,* January 1999, vol. 14 (1), 202-208